(19) Europäisches Patentamt
European Patent Office
Office européen des brevets

(11) EP 2 554 973 A1

(12) **EUROPEAN PATENT APPLICATION**
published in accordance with Art. 153(4) EPC

(43) Date of publication:
**06.02.2013 Bulletin 2013/06**

(21) Application number: **10849027.7**

(22) Date of filing: **08.12.2010**

(51) Int Cl.:
***G01N 21/27*** (2006.01) ***B82B 1/00*** (2006.01)

(86) International application number:
**PCT/JP2010/072055**

(87) International publication number:
**WO 2011/121857 (06.10.2011 Gazette 2011/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2010 JP 2010083684**

(71) Applicants:
- **Kaneka Corporation**
  **Osaka-shi, Osaka 530-8288 (JP)**
- **National Institute of Advanced Industrial Science and Technology**
  **Tokyo 100-8921 (JP)**

(72) Inventors:
- **SEZAKI, Fumiyasu**
  **Hyogo 676-8688 (JP)**
- **FUKUDA, Takashi**
  **Tsukuba-shi**
  **Ibaraki 305-8565 (JP)**

(74) Representative: **HOFFMANN EITLE**
**Patent- und Rechtsanwälte**
**Arabellastrasse 4**
**81925 München (DE)**

(54) **STRUCTURE, CHIP FOR LOCALIZED SURFACE PLASMON RESONANCE SENSOR, LOCALIZED SURFACE PLASMON RESONANCE SENSOR, AND MANUFACTURING METHODS THEREFOR**

(57) Implemented is a chip for localized surface plasmon resonance sensor, which is able to provide a localized surface plasmon resonance sensor of higher sensitivity. A structure of the invention is characterized by including a planar section and tubular bodies, wherein the tubular bodies are vertically arranged so that openings thereof open at the planar surface of the planar section, an average inner diameter of the openings of the tubular bodies is within a range of from 5 nm to 2,000 nm, a ratio (A/B) of inner diameter A of the openings of the tubular bodies and inner diameter B at the midpoint of the depth from the openings of the tubular bodies is within a range of from 1.00 to 1.80, and the bottom of the tubular bodies is aspherical.

FIG.3

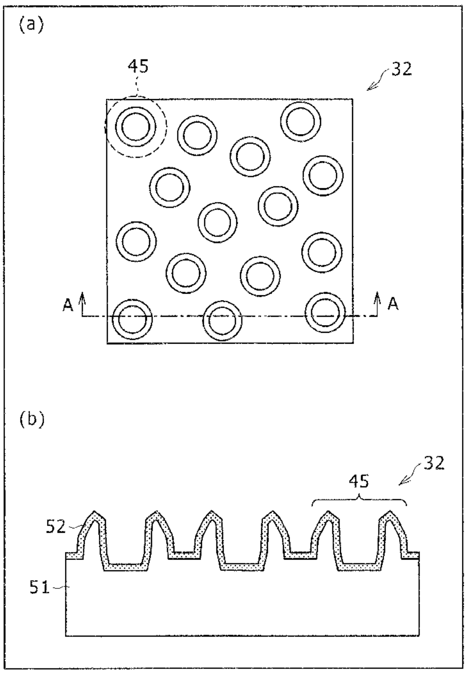


EP 2 554 973 A1

## Description

### Technical Field

This invention relates to a structure that is able to provide a localized surface plasmon resonance sensor of high sensitivity, a chip for localized surface plasmon resonance sensor, a localized surface plasmon resonance sensor obtained therefrom, and fabricating methods therefor. More particularly, the invention relates to a novel microstructure developed under attention to material transfer of a light responsive material based on light irradiation in the presence of a liquid, an optical processing method and a fabricating method.

### Background Art

60% of the human body is constituted of water and half of remaining 40% is made up of proteins. Most of cells, muscle and skin of the human body is composed of proteins. Accordingly, it has been frequently recognized that diseases are interrelated with the mutation of proteins. With cancers, influenza and other diseases, specific types of proteins increase in the body (or in the blood or the like) as the diseases proceed.

Accordingly, when the status of a specific type of protein (the presence or absence, an amount, etc., of a specific type of protein) is monitored, the morbidity and progress of disease can be known. At present, the interrelations between several tens of proteins and diseases have been confirmed. For instance, a biomolecule, which increases in association with the progress of a tumor (cancer), is called tumor marker, and different tumor markers, which correspond to the sites of tumor occurrence, have been now specified.

The biomolecules such as of proteins, DNA and sugar chains are often in direct relation with the occurrence of diseases. When the interaction between the biomolecules is analyzed, it has been becoming possible to elucidate the mechanism of disease and develop a specific drug.

As a tool for measuring the presence or absence and amounts of specific types of proteins including the above-mentioned tumor markers in high accuracy and in a simple manner, there is mentioned a biosensor whose future applications to the prevention of misdiagnosis, early diagnosis, preventive healthcare and the like have been expected.

For a method of detecting the interaction of biomolecules such as of proteins, surface plasmon resonance (SPR) has been utilized. The surface plasmon resonance is a resonance phenomenon, which is caused by the interaction between free electrons on a metal surface and an electromagnetic waves (light), and attention has now been paid thereto as a simpler procedure than a fluorescent detection system because of the unnecessity of a sample labeled with a fluorescent substance. The sensor making use of the surface plasmon resonance is classified into a propagating surface plasmon resonance sensor and a localized surface plasmon resonance sensor.

The principle of the propagating surface plasmon resonance sensor is briefly illustrated with reference to Figs. 10(a) to (d). As shown in Figs. 10(a) and 10(c), a propagating surface plasmon resonance sensor 11 is one wherein an about 50 nm thick metal film 13, such as of Au, Ag or the like, is formed on a surface of a glass substrate 12.

This propagating surface plasmon resonance sensor 11 is irradiated with light from a side of the glass substrate 12, and the light is totally reflected at the interface between the glass substrate 12 and the metal film 13. The totally reflected light is received to measure the reflectance of the light thereby sensing the biomolecules and the like.

More particularly, when the reflectance is measured by changing an incidence angle $\theta$ of the light, the reflection angle is significantly attenuated at a certain incidence angle (resonance incidence angle) $\theta 1$ as shown in Fig. 10(b). This is because when the light, which is incident at the interface between the glass substrate 12 and the metal film 13, is totally reflected at the interface, evernescent light (near-field light) occurring at the interface and the surface plasmon wave of the metal are interacted with each other. In particular, this is because in a specific wavelength or specific incidence angle, the energy of light is absorbed in the metal film 13 and converted to a vibration energy of free electrons in the metal film 13, thereby considerably lowering the reflectance of light.

This resonance condition depends on the dielectric constant (refractive index) of a peripheral material of the metal film 13, so that such a phenomenon is used as a procedure of detecting a change in physical properties of a peripheral material in high sensitivity. Especially, in case where used as a biosensor, an antibody 14 (probe) to be specifically bound to a specific type of protein (antigen) is fixed beforehand on the surface of the metal film 13 as shown in Fig. 10(a). If an antigen 16 serving as a target exists in a testing sample being introduced, the antigen 16 specifically binds to the antibody 14 as shown in Fig. 10(c). The binding between the antigen 16 and the antibody 14 results in the change in refractive index around the periphery of the metal film 13 and also in a resonance wavelength and a resonance incidence angle.

Accordingly, when measuring a change in resonance wavelength, a change in resonance incidence angle or a timewise change in resonance wavelength or resonance incidence angle, each prior to and after the introduction of the testing sample, it can be checked whether or not the antigen 16 is contained in the testing sample. Additionally, how much the antigen 16 is contained can also be checked.

Fig. 10(d) shows an instance of the results of measurement of the dependence of the reflectance on the incidence angle θ. In Fig. 10(d), the broken line indicates a reflectance spectrum 17a prior to the introduction of the testing sample, and the solid line indicates a reflectance spectrum 17b after binding of the antigen 16 to the antibody 14 after the introduction of the testing sample.

When a change Δθ of the resonance incidence angle prior to and after the introduction of the testing sample is measured in this way, whether or not the testing sample contains the antigen 16 can be checked. In addition a concentration of the antigen 16 can also be checked, and the presence or absence of a specific type of pathogenic organism and also of disease can be checked.

It will be noted that with an ordinary propagating surface plasmon resonance sensor, a prism is used so as to feed light into the glass substrate. Hence, the optical system of the sensor becomes complicated and large-sized, and there is a need of bringing a chip for sensor (glass substrate) and the prism into intimate contact with each other by means of a matching oil.

However, the propagating surface plasmon resonance sensor is so configured that a sensing area is at several hundreds of nanometers from the surface of the glass substrate and is thus larger than the size of protein (of about 10 nm). Hence, this sensor is apt to be affected by the temperature change of a testing sample and foreign matters (e.g. proteins other than a test object) in the testing sample. With a biosensor, it becomes sensitive to an antigen, not bound to an antibody and floating in a testing sample.

These cause noises, thus rendering it difficult to make a sensor that is small in signal-to-noise ratio (S/N ratio) and high in sensitivity. In order to make a sensor of high sensitivity, it is necessary to provide the step of removing a foreign matter that is a cause of noise and accurate temperature control means for keeping a temperature of a testing sample constant. Thus, the apparatus becomes large in size or high in cost.

In contrast thereto, with a localized surface plasmon resonance sensor, since a near field occurring on the surface of metal fine particles (metal nano fine particles) becomes a sensing region, there can be realized a sensitivity region of several tens of nanometers, which is equal to or less than a diffraction limit. As a consequence, the localized surface plasmon resonance sensor does not have sensitivity for a test object floating in a region distant from the metal fine particles, but is imparted with sensitivity only for a test object attached to a very narrow region on the surface of the metal fine particles, with the possibility that there can be realized a sensor of higher sensitivity.

The localized surface plasmon resonance sensor making use of metal fine particles shows no sensitivity for a test object floating away from the metal fine particles and thus, noise components become reduced. In this sense, higher sensitivity is ensured when compared with the propagating surface plasmon resonance sensor. However, with sensors of the type that makes use of surface plasmon resonance occurring in fine particles of metals such as Au, Ag and the like, the intensity of signals obtained from a test object attached on the surface of the metal fine particles is small. In that sense, the sensitivity has been still low or has not been satisfactory.

In order to solve such a difficulty in handling, there has been disclosed a localized surface plasmon resonance sensor that has a plurality of recesses which is similar to diffraction lattices (see, for example, Patent Document 1).

As shown in Fig. 11, the above localized surface plasmon resonance sensor has a substrate 19 having a structure wherein depressions (recesses) formed by nanoimprinting are regularly arranged, and a metal material being built up over the recesses by vacuum deposition or sputtering whereby the resulting metal layer 20 reflects the underlying profile. As shown in Fig. 12, with this localized surface plasmon resonance sensor 18, when linear polarized light 21 is irradiated from the side of the metal layer 20 of the substrate 19, a strong electric field 22 is concentrated at the recesses.

By the way, in Patent Document 2, there is described a structure formed by dropping a given amount of a liquid containing a given amount of polystyrene microspheres (diameter: 250 nm) over a surface of an azo polymer layer, under which a given intensity of blue LED (wavelength: 465 nm to 475 nm) is irradiated for a given time, followed by removing the microspheres, so that portions in contact with the polystyrene microspheres are depressed to provide a structure having such a shape that the azo polymer rises about the polystyrene microspheres (see paragraphs [0128] to [0130] and Fig. 8 of Patent Document 2).

Prior Art Documents

Patent Documents

Patent Document 1: Japanese Laid-open Patent Publication "Japanese Patent Laid-open No. 2008-216055 (laid open on September 18, 2008)"

Patent Document 2: Japanese Laid-open Patent Publication "Japanese Patent Laid-open No. 2008-170241 (laid open on July 24, 2008)"

## Summary of Invention

### Technical Problem

However, with the localized surface plasmon resonance sensor set out in Patent Document 1, it is described in Patent Document 1 that distance d between adjacent recesses is preferably not larger than 400 nm. If distance d between the recesses is too close (see Fig. 12), a flattened portion at a gap between the recess bottoms is recognized with light as a protrusion and thus, the once formed recess loses its function. More particularly, the localized surface plasmon resonance sensor set out in Patent Document 1 has a problem in that if distance d between the recesses is made smaller to increase a density of the recesses for higher sensitivity, the recesses per se do not function.

The invention has been made in view of the above problems and has for its object the provision of a structure and a chip for localized surface plasmon resonance sensor, each capable of providing a localized surface plasmon resonance sensor of higher sensitivity, and also of a localized surface plasmon resonance sensor configured therefrom. Additionally, the invention has as its object the provision of means for fabricating the above structure.

### Technical Solution

The present inventors have made intensive studies so as to solve the above problems and, as a result, succeeded in establishing a method of fabricating a structure set forth below and found that there can be realized a localized surface plasmon resonance sensor of higher sensitivity by application of the structure to the localized surface plasmon resonance sensor and completed the present invention.

More particularly, in order to solve the above problems, the structure according to the invention is characterized by including a planar section and tubular bodies, wherein the tubular bodies are vertically arranged so that openings thereof open at planar surface of the planar section, an average inner diameter of the openings of the tubular bodies is within a range of from 5 nm to 2,000 nm, and a ratio (A/B) between inner diameter A of the openings of the tubular bodies and inner diameter B at a midpoint of a depth from the openings of the tubular bodies is within a range of from 1.00 to 1.80. In the structure according to the invention, the bottoms of the tubular bodies are aspherical in shape.

According to the above configuration, when the above structure is used, for example, as a substrate for localized surface plasmon resonance sensor and a metal layer is formed on the surface thereof along the profile of the substrate, there can be fabricated a chip for localized surface plasmon resonance sensor. With the thus fabricated chip for localized surface plasmon resonance sensor, free electrons in the metal inside the recesses and at the periphery of the openings of the tubular bodies and incident light are coupled therebetween. Eventually, an electric field is concentrated inside the recesses and at the periphery of the openings of the tubular bodies, thereby generating a very strong localized surface plasmon resonance. Accordingly, when using the chip, such an effect is obtained that there can be provided a localized surface plasmon resonance sensor of higher sensitivity.

The chip for localized surface plasmon resonance sensor is able to develop such a very strong localized surface plasmon resonance phenomenon and can be conveniently used as a chip for surface enhanced Raman scattering spectroscopy, a fluorescence enhancing plate, a two-photon fluorescence enhancing plate, a second harmonic wave generating substrate and the like.

In order to solve the foregoing problems, the chip for localized surface plasmon resonance sensor is characterized by forming, on a substrate, a structure including a planar section and tubular bodies, wherein the tubular bodies are vertically arranged in such a way that openings thereof open at the planar surface of the planar section, an average inner diameter of the openings of the tubular bodies is within a range of from 5 nm to 2,000 nm, and a ratio (A/B) between inner diameter A of the openings of the tubular bodies and inner diameter B at a midpoint of a depth from the openings of the tubular bodies is within a range of from 1.00 to 1.80 and also by forming a metal layer so as to cover at least a part of the surface of the structure and reflect a surface structure of the structure. In the chip for localized surface plasmon resonance sensor according to the invention, the bottoms of the tubular bodies are aspherical in shape.

According to the above configuration, coupling between the free electrons in the metal inside the recesses and at the periphery of the openings of the tubular bodies and incident light takes place, and an electric field is concentrated at the inside of the recesses and at the periphery of the openings of the tubular bodies to generate a very strong localized surface plasmon resonance. Accordingly, such an effect is obtained that there can be provided a localized surface plasmon resonance sensor of higher sensitivity.

In order to solve the foregoing problems, a method for manufacturing the structure according to the invention is characterized by including a liquid coating step of coating a particulate material-free liquid on a light responsive material and a light irradiation step of irradiating light on the light responsive material on which the liquid has been coated in the liquid coating step. According to this method, the structure of the invention can be simply fabricated only by irradiating light on the light responsive material on which the particulate material-free liquid has been coated. As to the fabrication of the structure based on whatever principle, although investigations have now been made, we assume as follows. That

is, in case where the structure of the invention is fabricated by forming a film of a light responsive material on a surface of a substrate such as of glass, plastics or the like, and irradiating light after coating of a particulate material-free liquid on the film, the particulate material-free liquid is infiltrated into the light responsive material film to an extent thereby increasing the mobility of molecular chains in the light responsive material film. It is assumed that upon the light irradiation, near-field light generates at roughness points on the surface such as of the glass or plastic substrate, and the light responsive material is subjected to material transfer depending on the intensity of the near-field light, thereby forming the tubular structure. On the other hand, it is also considered that aside from the material transfer of the light responsive material depending on the intensity of near-field light, when light is irradiated, the light irradiation causes a change in affinity at the interface between the substrate surface and the light responsive material film to bring about spotty states of different affinities, thereby causing such a mechanism that the light responsive material undergoes material transfer upon light irradiation to occur simultaneously or independently.

When the structure fabricated according to the above method is used as a substrate for localized surface plasmon resonance sensor and a metal layer is formed on the surface along the profile of the substrate, there can be made a chip for localized surface plasmon resonance sensor. With the thus obtained chip for localized surface plasmon resonance sensor, coupling between the free electrons in the metal inside the recesses and at the periphery of the openings of the tubular bodies and incident light occurs, and an electric field is concentrated at the inside of the recesses and the periphery of the openings of the tubular bodies thereby generating a very strong localized surface plasmon resonance. Accordingly, such an effect is obtained that there can be fabricated a structure capable of providing a localized surface plasmon resonance sensor of high sensitivity in a simple, stable and low-cost manner.

The method for fabricating a structure according to the invention is characterized by including (i) fabricating a first structure through a liquid coating step of coating a particulate material-free liquid on a light responsive material and a light irradiation step of irradiating light on the light responsive material on which the liquid has been coated, (ii) fabricating a second structure serving as a mold of the first structure by coating a thermosetting resin or photocurable resin so as to completely cover the surface of the first structure and removing the thermosetting resin or photocurable resin after curing thereof, and (iii) obtaining a third structure, which is a duplicate of the first structure, by filling a thermosetting resin or photocurable resin in a portion of the second structure serving as the mold of the first structure and removing the thermosetting resin or photocurable resin after curing thereof. According to this method, there can be readily duplicated the structure of the invention, for example, by applying a thermosetting resin or photocurable resin to the mold, followed by removal after curing.

As stated hereinbefore, there is described, in Patent Document 2, a structure, which is formed by dropping a given amount of a liquid containing a given amount of polystyrene microspheres (diameter: 250 nm) over a surface of an azo polymer layer, under which blue LED (wavelength: 465 nm to 475 nm) of a given intensity is irradiated for a given time, followed by removing the microspheres thereby providing a profile of the azo polymer having depressed portions having once been in contact with the polystyrene microspheres and raised portions about the respective polystyrene microspheres (see paragraphs [0128] to [0130] and Fig. 8 of Patent Document 2). However, the description of Patent Document 2 is directed to the structure made to evaluate the optical deformability of a solid phase carrier for optical fixation having the azo polymer layer and is not intended to fabricate a structure per se. In respect of the fact that a given amount of a liquid containing a given amount of polystyrene microspheres (diameter: 250 nm) is dropped over the surface of the azo polymer layer, this completely differs from the method for fabricating the structure of the invention. In the technique according to Patent Document 2, the deformation of the azo polymer occurs by the action of the near-field light in the vicinity of the particles (polystyrene microspheres) associated with the light irradiation, meaning that because the deformation of the azo polymer occurs only in the vicinity of the particles, resulting in the structure formed only along the particle surfaces. More particularly, the structure set out in Patent Document 2 has recesses whose bottoms become spherical (or in approximately spherical form) (see Fig. 8 of Patent Document 2). In contrast thereto, the structure of the present invention apparently differs in that the bottoms of the tubular bodies are aspherical (see Fig. 13 and Figs. 20 to 25 of the present application).

The present inventors found that there can be made a structure provided with a barnacle-shaped profile in a planar surface by forming a thin film of a light responsive material (azo polymer) on a glass substrate, coating a suspension dispersing particles whose average diameter is within a range of from 1 nm to 100 μm onto the thin film and irradiating light on the light responsive material, on which the suspension has been coated, from a side of the glass substrate, and already filed an application for patent (PCT/JP2010/059340, hereinafter referred to as "related application"). In the invention of this related application, the particles serve as a mold and a barnacle-shaped profile is planarly formed. In contrast thereto, the fabrication method of the structure of the present invention differs in that a particulate material-free liquid, not the particle suspension, is coated. It has been a surprising and unexpected fact for us that the structure of the invention is formed in the absence of particles serving as a mold. It will be noted that the tubular bodies of the structure of the present invention differs in more stumpy structure than the barnacle-shaped profile of the structure of the related application.

Although common with the technique set out in Patent Document 2 in respect of coating of the particle suspension

on the light responsive material and subjecting to light irradiation, the related application and Patent Document 2 differ from each other in that light is irradiated on the light responsive material from a side of the glass substrate in the related application, whereas light is irradiated from the side of the particles in Patent Document 2. In the related application, light is irradiated on the light responsive material from the side of the glass substrate, so that the light responsive material is entirely irradiated with light thereby ensuring high mobility of the light responsive material. And the bottom of the resulting barnacle-shaped profile becomes aspherical. In the technique of Patent Document 2, since light is irradiated on the light responsive material from the side of the particles, irradiated light is scattered with the particles. Especially, an irradiation amount of light against the light responsive material hidden behind the particles becomes relatively small and thus, the mobility of the light responsive material lowers. Hence, as stated above, the structure described in Patent Document 2 has recesses whose bottoms are spherical (or in approximately spherical form) (see Fig. 8 of Patent Document 2). It is to be noted that since no particles are used in the fabrication method of the structure of the present invention, the bottoms of the tubular bodies of the structure become aspherical irrespective of the irradiation direction of light (see Fig. 13 and Figs. 20 to 25 of the present application).

Advantageous Effect

As stated hereinabove, according to the invention, there can be obtained an effect of providing a preferred structure and its fabrication method that is utilizable as a chip for a localized surface plasmon resonance sensor of high sensitivity, a chip for surface enhanced Raman scattering spectroscopy, a fluorescence enhancing plate, a two-photon fluorescence enhancing plate, a second harmonic wave generating substrate and the like.

Especially, according to the method for fabricating a structure according to the invention, such an effect is obtained that a structure, which can be used to fabricate a localized surface plasmon resonance sensor of high sensitivity, can be made in a simple, stable, and low-cost manner.

Brief Description of Drawings

[Fig. 1]
Fig. 1 is a plan view showing an example of a basic configuration of a reflection optical system of a localized surface plasmon resonance sensor according to an embodiment.
[Fig. 2]
Fig. 2 is a plan view showing an example of a basic configuration of a transmission optical system of the localized surface plasmon resonance sensor according to an embodiment.
[Fig. 3]
Fig. 3 shows an enlarged schematic configuration of a region of measurement in a localized surface plasmon resonance sensor according to an embodiment wherein (a) is a plan view and (b) is a sectional view taken along line A-A in Fig. 3(a).
[Fig. 4]
Fig. 4 shows sectional views showing an example of a method for fabricating a chip for localized surface plasmon resonance sensor according to an embodiment.
[Fig. 5]
Fig. 5 is an atomic force microscope (which may be sometimes referred to as "AFM" hereinafter) image of a structure obtained in Example 1.
[Fig. 6]
Fig. 6 is a graph of normalized values of top peaks obtained by dropping liquids (water, triethylene glycol) having different refractive indices on a surface of the chip for sensor obtained in Example 1, respectively, and measuring transmission spectra.
[Fig. 7]
Fig. 7 is an AFM image of the structure obtained in Example 2.
[Fig. 8]
Fig. 8 is a graph of normalized values of top peaks obtained by dropping liquids (water, polydimethylsiloxane, triethylene glycol, glycerol diglycidyl) having different refractive indices on a surface of the chip for sensor made in Example 2.
[Fig. 9]
Fig. 9 is a graph wherein a refractive index of a liquid dropped on the sensor chip in Example 2 is taken as an abscissa and a shift amount of a peak wavelength of a plasmon resonance absorption-derived spectrum is taken as an ordinate.

[Fig. 10]
Fig. 10 shows views schematically showing the principle of an existing propagating surface plasmon resonance sensor.
[Fig. 11]
Fig. 11 is a sectional view showing a schematic configuration of an existing localized surface plasmon resonance sensor.
[Fig. 12]
Fig. 12 is a sectional view showing an electric field being strongly concentrated at recesses in the existing localized surface plasmon resonance sensor.
[Fig. 13]
Fig. 13 is an atomic force microscope (AFM) image of a structure according to an embodiment of the invention.
[Fig. 14]
Fig. 14 shows AFM photographs of the structures obtained by annealing a light responsive material, after formation of a light responsive material film, under vacuum conditions at 80°C for 10 minutes and 60 minutes and 20 hours in the method for fabricating a structure of the invention.
[Fig. 15]
Fig. 15 is such that, in a light irradiation step of the method for fabricating a structure of the invention, (a) is an AFM image of the structure obtained one second after the light irradiation, (b) is an AFM image of the structure obtained five seconds after the light irradiation, (c) is an AFM image of the structure obtained 10 seconds after the light irradiation, (d) is an AFM image of the structure obtained 15 seconds after the light irradiation, (e) is an AFM image of the structure obtained 25 seconds after the light irradiation, (f) is an AFM image of the structure obtained 30 seconds after the light irradiation, (g) is an AFM image of the structure obtained 45 seconds after the light irradiation, (h) is an AFM image of the structure obtained 60 seconds after the light irradiation, and (i) is an AFM image of the structure obtained 300 seconds after the light irradiation.
[Fig. 16]
Fig. 16 is a schematic view illustrating an embodiment of a light irradiation step in the method for fabricating a structure according to the invention. The embodiment shown in Fig. 16 is one wherein light is irradiated from a substrate side.
[Fig. 17]
Fig. 17 is a schematic view illustrating an embodiment of a light irradiation step in the method for fabricating a structure according to the invention. The embodiment shown in Fig. 17 is one wherein light is irradiated from a liquid side.
[Fig. 18]
Fig. 18 is a schematic view illustrating an embodiment of a light irradiation step in the method for fabricating a structure according to the invention. The embodiment shown in Fig. 18 is another embodiment wherein light is irradiated from a liquid side.
[Fig. 19]
Fig. 19 is a planar SEM image of the sensor chip made in Example 4.
[Fig. 20]
Fig. 20 is a TEM image of P-P' section of the sensor chip shown in Fig. 19.
[Fig. 21]
Fig. 21 is a TEM image of Q-Q' section of the sensor chip shown in Fig. 19.
[Fig. 22]
Fig. 22 is a TEM image of R-R' section of the sensor chip shown in Fig. 19.
[Fig. 23]
Fig. 23 is a TEM image of S-S' section of the sensor chip shown in Fig. 19.
[Fig. 24]
Fig. 24 is a TEM image of T-T' section of the sensor chip shown in Fig. 19.
[Fig. 25]
Fig. 25 is a TEM image of U-U' section of the sensor chip shown in Fig. 19.
[Fig. 26]
Fig. 26 shows the results of investigation on the possibility of detecting a CRP antigen by use of a sensor chip on which a C-reactive protein (CRP) antibody has been fixed in Example 4 and is a view plotting a peak wavelength of transmission spectra relative to the concentration of the CRP antigen reacted.
[Fig. 27]
Fig. 27 shows the results of investigation on the possibility of detecting a fibrinogen antigen by use of a sensor chip on which a fibrinogen antibody has been fixed in Example 5 and is a view plotting a peak wavelength of transmission spectra relative to the concentration of the fibrinogen antigen reacted.

[Fig. 28]
Fig. 28 shows the results of investigation on the possibility of detecting a leptin antigen by use of a sensor chip on which a leptin antibody has been fixed in Example 6 and is a view plotting a peak wavelength of transmission spectra relative to the concentration of the leptin antigen reacted.
[Fig. 29]
Fig. 29 is a view showing the results of simulating, according to an FDTD (finite difference time domain) method, an electric field concentration intensity in the chip for localized surface plasmon resonance sensor made in Example 7.

Mode for Carrying Out the Invention

An embodiment of the invention is now described below.
It will be noted that in the present specification, "A to B" indicating a range means "not less than A to not larger than B," and various physical properties mentioned in the present specification mean values measured according to the methods described in examples appearing hereinafter unless otherwise indicated.
In order to solve the foregoing problems, the structure according to the invention is characterized by including a planar section and tubular bodies wherein the tubular bodies are vertically arranged so that openings thereof open at a planar surface of the planar section, an average inner diameter of the openings of the tubular bodies is within a range of from 5 nm to 2,000 nm, and a ratio (A/B) of inner diameter A of the openings of the tubular bodies to inner diameter B at the midpoint of a depth from the openings of the tubular bodies is within a range of from 1.00 to 1.80. In particular, the bottoms of the tubular bodies of the structure of the invention are aspherical.
According to the above configuration, there can be made a chip for localized surface plasmon resonance sensor, for example, by using the above structure as a substrate for localized surface plasmon resonance sensor and forming a metal layer on the surface thereof along a profile of the substrate. With the chip for localized surface plasmon resonance sensor obtained in this way, there occurs coupling between the free electrons in the metal in the inside of the recesses and at the periphery of the openings of the tubular bodies and incident light, so that an electric field is concentrated in the inside of the recesses and at the periphery of the openings of the tubular bodies thereby generating a very strong localized surface plasmon resonance. Accordingly, when using this chip, such an effect is obtained that there can be provided a localized surface plasmon resonance sensor of higher sensitivity.
Since such a very strong localized surface plasmon resonance phenomenon develops, the chip for localized surface plasmon resonance sensor can be conveniently used as a chip for surface enhanced Raman scattering spectroscopy, a fluorescence enhancing plate, a two-photon fluorescence enhancing plate, a second harmonic wave generating substrate and the like.
The structure of the invention permits an electromagnetic field caused by incident light to be more strongly localized at the periphery and inside of the recesses of the tubular bodies. In this sense, the (A/B) indicated before is more preferably within a range of from 1.00 to 1.50.
The structure of the invention is preferably such that a dispersion density of the tubular bodies in the planar section is within a range of from 1 to 500,000 bodies/100 μm-squares. According to the above configuration, where a chip for localized surface plasmon resonance sensor is made, there can be developed a more strong localized surface plasmon resonance, thus leading to the provision of a localized surface plasmon resonance sensor of higher sensitivity.
The structure of the invention may be made of a stimulation responsive material. The stimulation responsive material may be either a heat responsive material or a light responsive material.
The stimulation responsive material is preferably a light responsive material. Moreover, with the structure of the invention, the light responsive material should preferably contain an azo polymer derivative. This configuration enables the structure to be obtained more easily.
With the structure of the invention, the light responsive material is preferably made of an azo polymer derivative having an azo benzene group at the main and/or side chains. This configuration also enables the structure to be obtained more easily.
In order to solve the foregoing problems, the chip for localized surface plasmon resonance sensor of the invention is characterized in that the structure of the invention is formed on a substrate, and a metal layer is formed to cover at least a part of the surface of the structure and to reflect the surface structure of the structure.
In order to solve the foregoing problems, the chip for localized surface plasmon resonance sensor according to the invention is characterized by forming, on a substrate, a structure having a planar section and tubular bodies wherein the tubular bodies are vertically arranged so that openings thereof open at a planar surface of the planar section, an average inner diameter of the openings of the tubular bodies is within a range of from 5 nm to 2,000 nm, and a ratio (A/B) of inner diameter A of the openings of the tubular bodies to inner diameter B at the midpoint of a depth from the openings of the tubular bodies is within a range of from 1.00 to 1.80, and further forming a metal layer to cover at least a part of a surface of the structure and to reflect a surface structure of the structure. The chip for localized surface plasmon resonance sensor according to the invention has the tubular bodies whose bottoms are aspherical.

According to the above configuration, there occurs coupling between the free electrons in the metal inside the recesses and at the periphery of the openings of the tubular bodies and incident light, and an electric field is concentrated in the inside of the recesses and at the periphery of the openings of the tubular bodies, thereby generating a very strong localized surface plasmon resonance. Accordingly, such an effect is obtained that there can be provided a localized surface plasmon resonance sensor of higher sensitivity.

In the chip for localized surface plasmon resonance sensor according to the invention, the above (A/B) is more preferably within a range of from 1.00 to 1.50. According to this configuration, an electromagnetic field ascribed to incident light can be more strongly localized at the periphery and inside of recesses of the tubular bodies.

In the chip for localized surface plasmon resonance sensor according to the invention, the structure may be made of a stimulation responsive material. The stimulation responsive material may be either a heat responsive material or a light responsive material. Preferably, the stimulation responsive material is a light responsive material.

With the chip for localized surface plasmon resonance sensor according to the invention, the thickness of the metal layer is preferably within a range of from 10 nm to 500 nm, more preferably within a range of from 30 nm to 200 nm and most preferably within a range of from 40 nm to 125 nm. According to this configuration, there can be provided a localized surface plasmon resonance sensor of higher sensitivity.

With the chip for localized surface plasmon resonance sensor according to the invention, it is preferred that the metal layer is formed thereon with an organic molecular layer for fixing biomolecules. This configuration enables the use as a biosensor capable of detecting a specific type of biomolecule.

With the chip for localized surface plasmon resonance sensor according to the invention, the organic molecular layer preferably contains molecules whose length from the surface of the metal layer ranges from 50 nm to 200 nm and molecules whose length from the surface of the metal layer ranges from 1 nm to less than 50 nm. According to this configuration, the molecules having a length of from 1 nm to less than 50 nm binds to biomolecules in the vicinity of the metal layer and the molecules having a length of from 50 nm to 200 nm binds to the biomolecules kept away from the metal layer. The molecules having a length of from 50 nm to 200 nm and binding to the biomolecules are so bent as to permit the biomolecules to be attracted toward the vicinity of the metal layer. In doing so, a number of biomolecules can be gathered in the neighboring region of the metal layer. Thus, there can be provided a biosensor whose sensor sensitivity is higher.

With the chip for localized surface plasmon resonance sensor according to the invention, the material of the metal layer is preferably made of Au, Ag or an alloy thereof. According to this configuration, Au, Ag or an alloy thereof is able to generate a strong localized surface plasmon resonance.

In order to solve the foregoing problems, the localized surface plasmon resonance sensor is characterized by including such a chip of the invention for localized surface plasmon resonance sensor as set out hereinabove, a light source irradiating light on the chip for localized surface plasmon resonance sensor, and a photodetector receiving light reflected at or transmitted through the chip for localized surface plasmon resonance sensor.

According to the above configuration, because of the provision of the chip for localized surface plasmon resonance sensor according to the invention, a localized resonance electric field can be generated at the inside of the recesses and at the periphery of the openings of the tubular bodies of the chip. When light from the light source is irradiated on the region and the light reflected from or transmitted through the region is received with the photodetector, the reflectance or transmittance in the sensor chip, or the light intensity received with the photodetector can be measured. Thus, according to the above configuration, such an effect is obtained that there can be provided a localized surface plasmon resonance sensor of higher sensitivity.

With the localized surface plasmon resonance sensor of the invention, it is preferred that lights of two or more wavelengths are entered to the surface of the chip for localized surface plasmon resonance sensor to measure reflectances of the lights of the respective wavelengths reflected at the chip for localized surface plasmon resonance sensor, transmittances at the respective wavelengths transmitted through the chip for localized surface plasmon resonance sensor, or the light intensities at the respective reflected or transmitted wavelengths with the photodetector. According to this configuration, there can be evaluated a variation in resonance wavelength by comparing the reflectances, transmittances or light intensities at two or more specified wavelengths. Accordingly, the sensor can be conveniently used for detecting the presence or absence of a known specified substance.

In order to solve the foregoing problems, a method for fabricating the structure according to the invention is characterized by including the liquid coating step of coating a particulate material-free liquid on a light responsive material, and the light irradiation step of irradiating light on the light responsive material on which the liquid has been coated by the liquid coating step. According to this method, there can be simply made the structure of the invention only by irradiating light on the light responsive material, on which the particulate material-free liquid has been coated. Although studies have been made on how the structure is fabricated on the basis of whatever principles, the present inventors assume in a manner as follows. That is, where the structure of the invention is fabricated by forming a film of a light responsive material on the surface of a substrate such as of glass, plastics or the like and irradiating light after coating of a particulate material-free liquid on the film, the particulate material-free liquid infiltrates into the light responsive material film to an

extent thereby increasing the mobility of the molecular chains in the light responsive material film. It is assumed that the light irradiation enables near-field light to generate at roughness points on the surface of the glass, plastic or the like substrate. Depending on the intensity of the near-field light, the light responsive material is subjected to material transfer, thereby forming a tubular structure. On the other hand, aside from the material transfer of the light responsive material depending on the intensity of the near-field light, the light irradiation causes a change in affinity at the interface between the substrate surface and the light responsive material film thereby forming spotty states of different affinities. Thus, it is considered that there is caused another mechanism of subjecting the light responsive material to material transfer simultaneously or independently.

The chip for localized surface plasmon resonance sensor can be fabricated by using the structure made according to the above method as a substrate for localized surface plasmon resonance sensor and forming a metal layer on the surface along the profile of the substrate. With such a chip for localized surface plasmon resonance sensor obtained in this way, there occurs coupling between the free electrons in the metal in the inside of the recesses and at the periphery of the openings of the tubular bodies and incident light, so that an electric field is concentrated in the inside of the recesses and at the periphery of the openings of the tubular bodies, thereby generating a very strong localized surface plasmon resonance. Accordingly, such an effect is obtained that there can be fabricated a structure capable of providing a localized surface plasmon resonance sensor of higher sensitivity in a simple, stable and low-cost manner.

In the method for fabricating the structure according to the invention, the liquid is preferably made of at least one selected from the group including water, an alcohol and an organic solvent capable of dissolving the light responsive material. The liquid has such an effect that it is easy to handle and a desired structure is likely to be obtained. It will be noted that the liquid may contain hitherto known surface active agents.

Another method for fabricating the structure according to the invention is characterized by including (i) fabricating a first structure through a liquid coating step of coating a particulate material-free liquid on a light responsive material and a light irradiation step of irradiating light on the light responsive material on which the liquid has been coated, (ii) fabricating a second structure serving as a mold of the first structure by coating a thermosetting resin or photocurable resin so as to completely cover the surface of the first structure and removing the thermosetting resin or photocurable resin after curing thereof, and (iii) obtaining a third structure, which is a duplicate of the first structure, by filling a thermosetting resin or photocurable resin in a portion of the second structure serving as the mold of the first structure and removing the thermosetting resin or photocurable resin after curing thereof. According to this method, there can be readily duplicated the structure of the invention, for example, by applying a thermosetting resin or photocurable resin to the mold, followed by removal after curing.

Especially, it is preferred to repeat the step (iii) plural times. To repeat the step (iii) plural times leads to ease in mass-producing the structure according to the invention.

Hence, when the thus duplicated structure is used as a substrate for localized surface plasmon resonance sensor and a metal layer is formed on the surface along the profile of the substrate, there can be made a chip for localized surface plasmon resonance sensor. With the thus made chip for localized surface plasmon resonance sensor, there occurs coupling between the free electrons in the metal in the inside of recesses and at the periphery of the openings of the tubular bodies and incident light, so that a strong electric field is concentrated in the inside of the tubular bodies thereby generating a very strong localized surface plasmon resonance. Accordingly, such an effect is obtained that there can be fabricated the structure capable of providing a localized surface plasmon resonance sensor of higher sensitivity in a simple, stable and low-cost manner.

In order to solve the foregoing problems, a method for fabricating a chip for localized surface plasmon resonance sensor according to the invention is characterized by including the steps of making a structure by any one of the fabrication methods of the structure according to the invention and covering a surface of the structure obtained by the above step with a metal to form a metal layer having a profile reflected with the profile of the structure. According to the above method, such an effect is obtained that there can be fabricated a chip for localized surface plasmon resonance sensor, which is capable of providing a localized surface plasmon resonance sensor of higher sensitivity in a simple, stable and low-cost manner.

The invention embraces all the structures (including the above-stated structures of the invention, and a crescent-shaped structure, a barnacle-shaped structure and the like described hereinafter) which can be fabricated according to the method for fabricating a structure according to the invention. These structures can be utilizable as a chip for localized surface plasmon resonance sensor, a chip for surface enhanced Raman scattering spectroscopy, a fluorescence enhancing plate, a two-photon fluorescence enhancing plate, a second harmonic wave generating substrate and the like.

(I) Structure

The materials for configuring the structure according to this embodiment are not specifically limited and may be either inorganic materials or organic materials, or mixtures thereof. Moreover, the structure according to the invention may be made of a stimulation responsive material (e.g. a light responsive material, a heat responsive material or the like).

[Inorganic material]

As an inorganic material, mention is made of silicon (crystalline, polycrystalline, amorphous), carbon (crystalline, amorphous), nitrides, semiconductive materials and the like. These inorganic materials may be sintered ones of fine particles.

[Organic material]

As an organic material, mention is made of general-purpose polymers, engineering plastics, super engineering plastics, liquid crystal compounds and the like (which may be mixtures thereof and may be those whose secondary or tertiary structure is controlled as having a crosslinked structure). Of these organic materials, stimulation responsive materials may be included wherein physical properties or a shape thereof is changed in response to external stimulation.

[Stimulation responsive material]

The stimulation responsive materials are ones having mobility of molecular chains in response to an external stimulation. More particularly, mention is made of a heat responsive material and a light responsive material.

[Heat responsive material]

The heat responsive material is one wherein the molecular chains of the material undergo violent mobility in response to a thermal stimulation. The material exhibits fluidity or undergoes softening or deformation by application of heat stimulation. More particularly, there can be used amorphous materials such as polystyrene and acrylic materials, typical of which is polymethyl methacrylate, crystalline materials such as polyethylene, polypropylene, polyethylene terephthalate, isotactic polystyrene and the like, urethane resins, urea resins, melamine resins, phenolic resins and the like. In addition, copolymers such as styrene-methacrylate copolymers (block copolymers, random copolymer and the like) may also be used. These materials may be used in combination.

[Light sensitive material]

The light sensitive material is one that undergoes material transfer by irradiation of light. More particularly, those materials are mentioned wherein a material transfer phenomenon occurs along bright and dark sections of light at an irradiated region thereof.

As such a light responsive material, no specific limitation is placed so far as it is able to undergo optical deformation and exhibits the material transfer in response to the bright and dark sections of the light irradiated region. For instance, mention is made of organic or inorganic materials which contain, in a matrix material, an ingredient (photoreactive ingredient) capable of causing ablation, photochromism, light-induced molecular orientation and the like by irradiation of light and is changed in volume, density, free volume and the like by irradiation of light. As a light responsive material, mention may also be made of an inorganic material generically called chalcogenite glass, which contains a structure wherein any of elements selected from the group including sulfur, selenium and tellurium and any of elements selected from the group including germanium, arsenic and antimony are bound together.

The photoreactive ingredient includes, for example, a photoisomerizable ingredient or a photopolymerizable ingredient, which is an ingredient capable of undergoing an anisotropic photoreaction involving a profile change of material.

The photoisomerizable ingredient is, for example, one capable of undergoing trans-cis photoisomerization, and is particularly and typically an ingredient that has a dye structure having an azo group (-N=N-), especially, a chemical structure of azobenzene or a derivative thereof.

In case where the isomerization ingredient is a material containing a dye structure having an azo group, it is preferred that the dye structure has one or two or more electron attractive functional groups (electron attractive substituent groups) and/or one or two or more electron donative functional groups (electron donative substituent groups). More preferably, both electron attractive functional groups and electron donative function groups are provided.

The electron attractive functional group is preferably such a functional group whose substituent constant $\sigma$ in the Hammett equation is a positive value. The electron donative functional group is preferably a functional group whose substituent constant $\sigma$ in the Hammett equation is a negative value.

In other words, the above isomerization ingredient should preferably have such electron donative substituent and electron attractive substituent groups as mentioned above under conditions of establishing the following formula (1)

$$\Sigma|\sigma| \leq |\sigma 1|+|\sigma 2| \quad \ldots \quad (1)$$

(wherein σ is a substituent constant in the Hammett equation, σ1 is a substituent constant of cyano group, and σ2 is a substituent constant of amino group). In doing so, there may be contained a dye structure that is so controlled that a cutoff wavelength at a longer side of light absorption wavelengths exits in a wavelength region that is shorter than a fluorescent peak wavelength in a fluorescent dye for fluorescent analysis. This allows accurate measurement.

The dye structure is not critical in type and preferably includes, for example, a dye structure having an azo group and especially, a chemical structure of azobenzene or a derivative thereof. More particularly, the light responsive material preferably contains an azo polymer derivative and more preferably an azo polymer derivative having an azobenzene group at the main chain and/or side chains thereof.

In a matrix material of the light responsive material, the light responsive ingredient may be merely dispersed or may be chemically bound to the constituent molecules of the matrix material. In view of the substantially complete control of the distribution density of the photoreactive ingredient in the matrix material and also of the heat resistance and stability with age of the material, it is preferred that the light responsive ingredient is chemically bound to the constituent molecules of the matrix material.

As the matrix material, there may be used organic materials such as ordinary polymer materials, and inorganic materials such as glass. When taking into account the uniform dispersability or binding property of the light responsive ingredient to the matrix material, organic materials, particularly, polymer materials, are preferably used.

Although the type of polymer material serving as a matrix material is not critical, it is preferred that repeating structural units of the polymer have an urethane group, a urea group or an amide group. It is more preferred from the standpoint of heat resistance that a ring structure such as a phenylene group is contained in the main chain of the polymer.

The polymer material serving as a matrix material is not critical with respect to the molecular weight and the degree of polymerization so far as it is moldable into a required shape. The polymer configuration may be in a linear, branched, ladder-structured, star or the like form, and may be either a homopolymer or a copolymer.

Although it is preferred for the stability with age of optical deformation that the glass transition temperature of the polymer material is as high as, for example, not lower than 100°C, those polymers whose glass transition temperature is room temperature or below may be usable.

The light responsive materials usable in the invention include, for example,

[Chemical Formula 1]

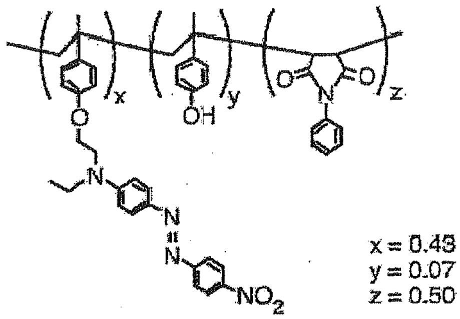

an azo polymer having the above structure (a copolymer of N-phenylmaleimide (z), 4-isopropenylphenol (y) and 4'-[N-ethyl-N-(4-isopropenylphenoxyethyl)amino]-4"-nitroazobenzene (x) (x : y : z = 0.43 : 0.07 : 0.50) (reference literature: Mat. Res. Soc. Symp. Proc. Vol. 488 (1998), pp. 813 to 818, "Synthesis of High-Tg Azo Polymer and the optimization of its poling condition for stable EO system," see Japanese Patent Laid-open No. 2006-77239 and this polymer may be hereinafter abbreviated as "PMPD43" sometimes), an azo polymer having the following structure: a side-chain azo polymer, poly(orange tom-1 isophoronedisocyanate) and used in examples appearing hereinafter

[Chemical Formula 2]

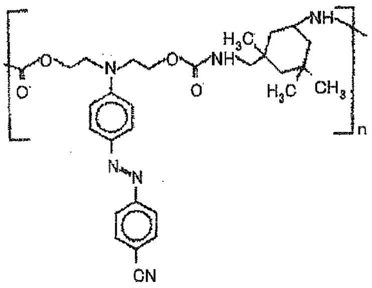

(reference literature: Direct Fabrication of Surface Relief Holographic Diffusers in Azobenzene Polymer Films, OPTICAL REVIEW Vol. 12, No. 5 (2005) 383 to 386, this polymer is noted as "POT1" in examples), and poly[4'-[[2-(acryloyloxy) ethyl]ethylamino]-4-nitroazobenzene] (which is referred as "pDR1A," reference literature, poly[4'-[[2-(acryloyloxy)ethyl] ethylamino]-4-nitroazobenzene], Macromolecule Vol. 25, (1992) 2268 to 2273), and the like.

[Structure]

The structure according to this embodiment is provided with a planar section and tubular bodies and has such a configuration that the tubular bodies are vertically arranged so that openings thereof open at the planar surface of the planar section. In other words, the structure has such a configuration as if chimneys extend themselves from the ground into the sky. The openings of the tubular bodies are not limited to a circle, but may be in an elliptical, square or the like form.

The average inner diameter of the openings of the tubular bodies of the structure according to this embodiment is within a range from 5 nm to 2,000 nm. The average inner diameter of the openings of the tubular bodies can be determined by observing the openings of the tubular bodies with an atomic force microscope (AFM), a scanning electron microscope (SEM), a transmission electron microscope (TEM) or the like and measuring the inner diameters of the openings. The term "inner diameter of openings" is intended to mean a diameter of the maximum inscribed circle in relation to the shape of the openings, and is intended to mean, for example, a diameter of a circle in case where the shape of the openings is substantially circular, a minor axis of an ellipse in case of the shape being substantially elliptic, a side length of a quadrate in case of the shape being substantially square, and a short side length of a rectangle in case of the shape being substantially rectangular. The inner diameters of the openings of a plurality of (preferably, not less than 10, more preferably not less than 20 and much more preferably not less than 50) tubular bodies are measured and an average value thereof is obtained and thus defined as an "average inner diameter of the openings of the tubular bodies." It will be noted that if an average inner diameter of the openings of the tubular bodies of the structure according to the embodiment is within a range of from 5 nm to 2,000 nm, incident light can be localized in the inside of the recesses and at the periphery of the openings of the tubular bodies, so that the structure can be favorably utilizable for the fabrication of a chip for localized surface plasmon resonance sensor. More preferably, the average inner diameter of the openings of the tubular bodies is within a range of 200 nm to 500 nm. When the average inner diameter of the openings of the tubular bodies is within a range of 200 nm to 500 nm, incident light can be more strongly localized.

The structure according to the embodiment has a ratio (A/B) between the inner diameter A of the opening of the tubular body and the inner diameter B at the midpoint of the depth from the openings of the tubular bodies is within a range of from 1.00 to 1.80. When the above value of (A/B) is within the above range, such an effect can be enjoyed that an electromagnetic field caused by incident light can be strongly localized in the inside of the recesses and at the periphery of the openings of the tubular bodies. The value of (A/B) is more preferably within a range of from 1.00 to 1.50, much more preferably within a range of from 1.00 to 1.30, and most preferably within a range of from 1.00 to 1.20. When the above value of (A/B) is within such a range as defined above, the structure according to this embodiment has almost no difference between the inner diameter A and the inner diameter B, i.e. it can be said that the tubular body of the structure of the embodiment has a stumpy configuration in the inner structure thereof. Since the inner structure of the tubular body of the structure of this embodiment becomes stumpy, so that such an effect can be enjoyed that an electromagnetic field caused by incident light can be more strongly localized in the inside of the recesses and at the periphery of the openings of the tubular bodies.

The inner diameter A and the inner diameter B can be grasped from a sectional view of the tubular bodies taken with the atomic force microscope (AFM). The manner of measuring the inner diameters A and B is particularly illustrated with reference to Fig. 13. Fig. 13 is an atomic force microscopic (AFM) image of the structure according to the embodiment. A vertical sectional view of the planar section of the structure of the embodiment is taken from the AFM image. In the planar section of the tubular body which is intended for measurement of an inner diameter, the two apexes (indicated by downward triangles in the figure) most projected from the planar section are found out. A distance between intersection points of the vertical lines drawn from these apexes to a line indicating the planar surface of the planar

section in the figure (i.e. an x axis in the figure) and the x axis is obtained and defined as inner diameter A.

Next, the manner of measuring inner diameter B is illustrated. The highest point (a highest point in case where the arrow direction of the y axis is taken as a positive direction, indicated by the downward triangle in the figure) of a tubular body and the lowest point of the tubular body (a lowest point in case where the arrow direction of the y axis is taken as a positive direction, indicated by the upward triangle in the figure) are found out. A distance between a line drawn parallel to the x axis at the lowest point (indicated by dotted line in the figure) and a line drawn parallel to the x axis at the highest point (indicated by a double arrow line in the figure) is defined as "depth from an opening of a tubular body." The inner diameter of the tubular body at the midpoint (indicated by the arrow in the figure) of the depth is measured and defined as inner diameter B. It will be noted that in the practice of the invention, the inner diameters A and B are, respectively, values measured with AFM.

In the structure according to this embodiment, the average value of the depths from the openings of the tubular bodies is preferably within a range of from 5 nm to 10 μm, more preferably within a range of from 10 nm to 500 nm. The depths of a plurality of (preferably not less than 10, more preferably not less than 20 and much more preferably not less than 50) tubular bodies are measured and an average value thereof is obtained and defined as "an average value of the depths from the openings of the tubular bodies." It is to be noted that if the average value of the depth from the openings of the tubular bodies of the structure according to the embodiment is within a range of from 5 nm to 10 μm, it is enabled to strongly localize incident light in the inside of the recesses ant at the periphery of the openings of the tubular bodies and thus, the structure can be favorably utilized for the fabrication of a chip for localized surface plasmon resonance sensor.

It will be noted that the structure of the embodiment is so configured that the innermost portion of the tubular body may lie at a minus side of a line (x axis in the figure) indicating the planar surface of the planar section, or at a plus side thereof. In other words, in case where the tubular body-free surface of the structure is disposed in a vertically downward manner, the bottoms of the recesses of the tubular bodies may lie either below or above the planar section.

The dispersion density of the tubular bodies in the planar section is preferably within a range of from 1 to 500,000 bodies per 100 μm square, more preferably within a range of from 10 to 300,000 bodies per 100 μm square and most preferably within a range of from 50 to 200,000 bodies per 100 μm square. This dispersion density is determined by counting the number of tubular bodies existing in an arbitrary region through AFM or the like and calculating the number per 100 μm square therefrom.

In the structure of this embodiment, the tubular bodies may be so shaped that the inner diameter decreases from the opening toward the deep portion (V form), or may be so shaped that the inner diameter increases from the opening toward the deep portion (inverted V form). More particularly, the tubular bodies shown in Figs. 20 and 21 have an inner diameter that increases toward the deep portion and can be called inverted V-form. The tubular bodies shown in Figs 22 and 24 have an inner diameter that decreases toward the deep portion and can be called inverted V-form.

As shown in Fig. 13 and Figs. 20 to 25 appearing hereinafter, the structure of this embodiment is so configured that the bottom of the tubular bodies is aspherical. Especially, as shown in Figs. 20 to 25, the structure of the embodiment has tubular bodies whose bottom is approximately planar. The "bottom of tubular bodies" means a portion situated at a side opposite to the opening.

(II) Chip for localized surface plasmon resonance sensor

The chip for localized surface plasmon resonance sensor is characterized in that such a structure as set out hereinabove is formed on a substrate, and a metal layer is formed so as to cover at least a part of the surface of the structure and reflect a surface structure of the structure. In other words, the chip for localized surface plasmon resonance sensor is characterized in that there is formed, on a substrate, a structure made up of a light responsive material and provided with a planar section and tubular bodies, wherein the tubular bodies are vertically arranged so that openings thereof open at a planar surface of the planar section, an average inner diameter of the openings of the tubular bodies is within a range of from 5 nm to 2,000 nm, a ratio (A/B) of inner diameter A of the openings of the tubular bodies and inner diameter B at the midpoint of the height of the tubular bodies relative to the planar section is within a range of from 1.00 to 1.80, and a metal layer is further formed to cover at least a part of a surface of the structure and reflect a surface structure of the structure. It will be noted that with respect to the chip of this embodiment for localized surface plasmon resonance sensor, those matters common with the foregoing structure should be referred to the "(I) Structure."

For the substrate used in the chip for localized surface plasmon resonance sensor according to this embodiment, there is preferably used glass, acrylic resins, amorphous carbon, crystalline silicon, polycrystalline silicon, amorphous silicon or the like. Especially, as a substrate used in a localized surface plasmon resonance method of a transmission type, a substrate of high optical transmittance (a total light transmittance of not less than 60%, (converted to 1 mm thickness)) is preferably used.

Since the chip for localized surface plasmon resonance sensor according to this embodiment has such a profile of the structure as set out before, there occurs coupling between the free electrons in the inside of the recesses and at

the periphery of the openings of the tubular bodies and incident light, an electric field is concentrated in the inside of the recesses and at the periphery of the openings of the tubular bodies, thereby causing a very strong localized surface plasmon resonance to occur. The term "localized resonance electric field" used herein means an electric field wherein a resonance electric field does not propagate along a metal surface and the region of an electric field reinforced with resonance is smaller than a diffraction limit of incident light.

The chip for localized surface plasmon resonance sensor according to the embodiment has such "tubular bodies" as stated hereinbefore. According to this configuration, coupling between the free electron in the metal in the inside of the recesses and at the periphery of the openings of the tubular bodies and incident light is more likely to occur, so that a stronger electric field is concentrated in the inside of the recesses and at the periphery of the openings thereby causing a stronger localized surface plasmon resonance to occur.

With the chip for localized surface plasmon resonance sensor according to the embodiment, an average inner diameter of the openings of the tubular bodies is within a range of from 5 nm to 2,000 nm. When used for a biosensor, the average inner diameter of the openings of the tubular bodies is more preferably within a range of from 20 nm to 1,000 nm since the size of ordinary proteins is at approximately 10 nm.

With the chip for localized surface plasmon resonance sensor according to the embodiment, an average value of the depths from the openings of the tubular bodies is preferably within a range of from 5 nm to 10 $\mu$m, more preferably within a range of from 10 nm to 500 nm. If the depth of the tubular body is within the above range, a localized surface plasmon resonance phenomenon can be conveniently caused to occur at high sensor sensitivity.

Although the chip for localized surface plasmon resonance sensor according to the embodiment is no critical with respect to the distance between tubular bodies, the dispersion density of the tubular bodies in the planar section is preferably within a range of from 1 to 500,000 bodies per 100 $\mu$m square, more preferably within a range of from 10 to 300,000 bodies per 100 $\mu$m square and most preferably within a range of from 50 to 200,000 bodies per 100 $\mu$m square.

With the chip of the embodiment for localized surface plasmon resonance sensor, the thickness of the metal layer is preferably within a range of from 10 nm to 500 nm. When the metal layer thickness is within the above range, a satisfactory quantity of reflected light as well as of transmitted light can be ensured, resulting in high measurement accuracy.

For the chip for localized surface plasmon resonance sensor according to the embodiment, the material of the metal layer preferably includes Au, Ag, or an alloy thereof. When the material of the metal layer is Au, Ag or an alloy thereof, a strong localized surface plasmon resonance can be caused to occur.

An inorganic material layer may be further formed on the metal layer. This is because the metal layer can be prevented from oxidative degradation and molecules such as of proteins used as a measuring object can be inhibited from deactivation. For the inorganic material, mention is conveniently made of silicon dioxide, zinc oxide, tin oxide, titanium oxide and the like.

With the chip for localized surface plasmon resonance sensor according to the embodiment, it is preferred that an organic molecular layer for fixing biomolecules is formed on the metal layer. This enables the chip as a biosensor capable of detecting a specific type of biomolecule. More particularly, when using the chip of this embodiment, a surface area for forming the organic molecular layer can be increased, thereby leading to improved sensor sensitivity.

With the chip for localized surface plasmon resonance sensor according to the embodiment, the organic molecular layer preferably contains molecules whose length from the metal layer surface ranges from 50 nm to 200 nm and molecules whose length from the metal layer surface ranges from 1 nm to less than 50 nm.

When the organic molecular layer contains such molecules as mentioned above, the molecules having a length from 1 nm to less than 50 nm bind to biomolecules in the vicinity of the metal layer and the molecules having a length of from 50 nm to 200 nm bind to biomolecules apart from the metal layer. The molecules whose length ranges from 50 nm to 200 nm and which have been bound to the biomolecules bend, so that the biomolecules are pulled toward the vicinity of the metal layer. Accordingly, a great number of biomolecules can be gathered in a neighboring region of the metal layer, thereby leading to more enhances sensor sensitivity.

The molecules forming the organic molecular layer include biotin-modified polyethylene glycol, ORLA 18 (commercial name, made by Orla Protein Technologies Ltd.), dextran and the like.

The measurement of the molecular chain length can be made according to a dynamic light scattering method.

(III) Localized surface plasmon resonance sensor

The localized surface plasmon resonance sensor according to this embodiment includes such a chip for localized surface plasmon resonance sensor as in the foregoing embodiment, a light source irradiating light on the chip for localized surface plasmon resonance sensor, and a photodetector receiving light reflected at or transmitted through the chip for localized surface plasmon resonance sensor.

The localized surface plasmon resonance sensor of this embodiment generates a localized resonance electric field on the surface of the metal layer of the chip for localized surface plasmon resonance sensor, and light from the

light source is irradiated on the surface of the sensor chip, followed by receiving, with the photodetector, light reflected at or transmitted through a region where the resonance electric field occurs on the surface of the metal layer. The reflectance or transmittance of the sensor chip or light intensity received with the photodetector is measured.

With the localized surface plasmon resonance sensor according to the embodiment, lights of two or more wavelengths may be vertically irradiated on the surface of the sensor chip to measure the reflectances or transmittances of lights of the respective wavelengths reflected at or transmitted through the sensor chip, or light intensities at the respective wavelengths with the photodetector.

According to this embodiment, when comparing the reflectances or transmittances or light intensities at two or more wavelengths, a change in resonance wavelength can be evaluated. Accordingly, this embodiment is useful in application for detecting the presence or absence of a known specified substance.

When a localized surface plasmon resonance occurs in the chip for localized surface plasmon resonance sensor of the embodiment, the energy of irradiated light is absorbed with a surface plasmon wave of the metal layer, so that the light reflectance or transmittance, or the light intensity received with the photodetector lowers at a certain wavelength (resonance wavelength).

This resonance wavelength changes depending on the refractive index of a medium present at the inside of the recesses and periphery of the openings of the tubular bodies. When using such a localized surface plasmon sensor, deposition of a dielectric substance in the regions and a change in amount of the deposition can be detected. Especially, the sensor can be favorably used as a biosensor to detect a specific type of protein.

Additionally, with the localized surface plasmon resonance sensor according to this embodiment, an electric field is greatly enforced in the inside of the recesses and at the periphery of the openings of the tubular bodies, thereby causing a very strong surface plasmon resonance to occur. Thus, sensing of very high sensitivity is enabled when comparing with conventional propagating surface plasmon resonance sensors or localized surface plasmon resonance sensors.

Especially, the localized surface plasmon resonance sensor of this embodiment includes such tubular bodies as set out, for which when light is entered to the surface in the region where the tubular bodies are formed, there occurs coupling between the free electrons in the side surface of the metal of the inner wall of the tubular bodies and the incident light. Hence, a stronger electric field is concentrated in the inside of the tubular bodies thereby causing a stronger localized surface plasmon resonance to occur.

Further, the localized surface plasmon resonance sensor of the embodiment has sensitivity within a narrow region of about several tens of nanometers from the surface of the metal layer, so that noises ascribed to a substance in a region distant from the metal layer are small thereby enabling a localized surface plasmon resonance sensor of a good S/N ratio to be made.

With reference to Fig. 1, an instance of a fundamental configuration of a reflection optical system of the localized surface plasmon resonance sensor (hereinafter referred to as localized SPR sensor) of the embodiment is now described. Fig. 1 is a plan view schematically showing a fundamental configuration of a reflection optical system of a localized SPR sensor 24 of the embodiment.

As shown in Fig. 1, the localized SPR sensor 24 includes a light source 25, a collimator lens 26, a collimator plate 27 having a pinhole, a beam splitter (for which a half mirror may be used) 28, a spectroscope 29, a photodetector 33, a chip 30 for localized SPR sensor and a data processor 31.

Light outputted from the light source 25 is led to the collimator lens 26. The collimator lens 26 collimates the light outputted from the light source 25 to allow passage as parallel beams. The light collimated with the collimator lens 26 is passed through the pinhole of the collimator plate 27, resulting in more focused parallel beams.

The light passed through the pinhole of the collimator plate 27 is inputted into the beam splitter 28 and only the light of about 1/2 of the incident amount of light straightly passes through the beam splitter. The parallel beams passed through the beam splitter 28 are irradiated on a measurement region (i.e. a region where tubular bodies are formed) 32.

The light irradiated on the measurement region 32 is reflected at the measurement region 32 and returned back to the incoming direction. The measurement light, returned back to the incoming direction, enters into the beam splitter 28. The measurement light entering into the beam splitter 28 is reflected by about 1/2 of its amount of light in a direction of 90° at a bonded face in the beam splitter 28.

The light reflected at the beam splitter 28 is passed through the spectroscope 29 and dispersed into lights of different wavelengths, followed by receiving with the photodetector 33. Accordingly, the lights dispersed with the spectroscope 29 are received with the photodetector 33 and thus, light intensities at the respective wavelengths can be detected.

The data processor 31 is preliminarily given with light intensity data at the respective wavelengths of light that has been irradiated to the measurement region 32 where no sample is present. Accordingly, when comparing the preliminarily given data with the light intensities of the respective wavelengths detected with the photodetector 33 by the data processor 31, the spectral characteristics (reflectance spectra, etc.) of the reflectances at the respective wavelengths in the measurement region 32 can be obtained.

Next, with reference to Fig. 2, an instance of a fundamental configuration of a transmissive optical system of the localized SPR sensor of the embodiment is described. Fig. 2 is a plan view schematically showing a fundamental configuration of a transmissive optical system of the localized SPR sensor 34 of the embodiment.

A localized SPR sensor 34 includes a light source 25, a collimator lens 26, a collimator plate 27 having a pinhole, a chip 30 for localized SPR sensor including a measurement region 32, a spectroscope 29, a photodetector 33 and a data processor 31.

Light outputted from the light source 25 is led to the collimator lens 26. The collimator lens 26 collimates the light outputted from the light source 25 to pass it in the form of parallel beams. The light collimated with the collimator lens 26 is passed through the pinhole of the collimator plate 27, resulting in more focused parallel beams.

The light passed through the pinhole of the collimator plate 27 is irradiated on a measurement region (a region where tubular bodies are formed) 32. The light irradiated on the measurement region 32 passes through the measurement region 32. The transmitted measurement light is passed through the spectroscope 29 wherein it is dispersed into lights of different wavelengths and received with the photodetector 33.

The data processor 31 is preliminarily given with light intensity data of the respective wavelengths of light irradiated to the measurement region 32 where no sample is present. Accordingly, when comparing the preliminarily given data with the light intensities at the respective wavelengths detected with the photodetector 33 by the data processor 31, the spectral characteristics (reflectance spectra, etc.) of the reflectances at the respective wavelengths in the measurement region 32 can be obtained.

It will be noted that in the configurations of the above reflective optical system and transmissive optical system, although the light source 25 is preferably one capable of emitting white light, such as a halogen lamp or the like, there may be usable a source that is able to emit those including light of a wavelength region used for the measurement. The parallel beams passed through the pinhole may be linearly-polarized light, or elliptically-polarized light, circularly polarized light or the like, as having a given polarized plane.

Further, an optical part (e.g. a $\lambda/2$ plate or the like) for making such a different polarization condition may be disposed, if necessary. It should be noted that in this embodiment, the vibration plane of an electric field of light (electromagnetic wave) is defined as a polarization plane and the direction of the electric field is defined as a polarization direction.

The photodetector 33 can be constituted of a photodiode array having a plurality of light-receiving planes, CCD, a light receiver making use of a plasmon phenomenon, or the like.

Next, the measurement region 32 in the above-stated localized SPR sensors 24 and 34 is described in detail with reference to Fig. 3.

Fig. 3(a) is a plan view showing the measurement region 32 as enlarged and Fig. 3(b) is a sectional view taken along line A-A indicated by arrows of Fig. 3(a).

In the measurement region 32, a plurality of tubular bodies 45 (tubular bodies made of a metal thin film and particularly indicated within a broken-line circle) are formed in the surface of a metal layer 52.

When light is vertically inputted onto the measurement region 32 under such a configuration as shown above, the light is passed into the tubular bodies 45, whereupon an electric field generates in the inside and at the periphery of the tubular bodies 45. The light, inputted to the metal layer 52 having the tubular bodies 45, causes an electric field to occur in the inside and at the periphery of the tubular bodies 45. Coupling between the electric field and the intrinsic oscillation of the free electrons inside the metal layer 52 permits localized SPR to occur. Accordingly, the energy of the light inputted to the metal layer 52 is concentrated into the tubular bodies 45 by the action of the localized SPR and part of the light inputted to the metal layer 52 is absorbed.

As a consequence, the reflectance or transmittance determined from the light received with the photodetector 33 becomes small at a specific wavelength (resonance wavelength). This specific wavelength changes depending on the refractive index of a test sample solution. When a wavelength at a minimum point of reflectance or its change is checked, it can be possible to inspect a refractive index or type of dielectric substance contained in the test sample solution.

When using an antibody or the like that is specifically bound to a specific protein, the presence or absence or a content or the like of the specific protein contained in the test sample solution can be inspected.

It will be noted that in such a measurement region 32, the diameter or depth of the tubular bodies 45 may be made uniform or non-uniform.

(IV) Method for fabricating the structure

The method for fabricating the structure according to the invention is one, which including, at least, (i) liquid coating step and (ii) light irradiation step. In the following description, an embodiment including (i) liquid coating step, (ii) light irradiation step, (iii) step of fabricating a mold of structure, and (iv) step of duplicating a structure using the mold is illustrated, to which the invention should not be construed as limited thereto.

[Liquid coating step]

The liquid coating step is one wherein a particulate material-free liquid is coated onto a light responsive material.

The light responsive materials used may be the same as ones exemplified in "(I) Structure."

The "particulate material-free liquid" used herein means a liquid that is substantially free of a particulate material. The "particulate material" means a particulate solid in liquids. Especially, there is some case that a material having an average particle size within a range of 1 nm to 100 μm is meant. The "average particle size" means an average particle size of primary particles and is determined by measuring with the BET method (specific surface method). The "substantially free" means no detection with detecting means (e.g. a size distribution detector) capable of detecting a 1 nm to 1 μm-sized material.

The "particulate material" is not critical so far as it is a material present as particulate solid in a liquid and means a rigid matter such as of metal particles or a very soft matter such as of animal cells. More particularly, as such "particulate material," mention is made of a particulate material made of at least one material selected from the group including inorganic materials, metal materials and polymer materials, and metal particles, metal oxide particles, semiconductor particles, ceramic particles, plastic particles or particulate materials of two or more thereof (e.g. blends or layered structures of two materials).

For the metal particles, mention is made, for example, of gold, silver, copper, aluminum, platinum and the like. As the metal oxide particles, mention is made, for example of silica, titanium oxide, tin oxide, zinc oxide and the like. For the plastic particles, mention is made, for example, polystyrene particles, acrylic particles and the like.

The "liquid" used in this step includes water, an organic solvent capable of dissolving the light responsive material and including an alcohol such as methanol, ethanol or the like, tetrahydrofuran (THF), chloroform, cyclohexanone, acetone or the like, or a mixture of water and such an organic solvent as indicated above.

The coating method of the liquid is not critical, and mere dropping with a dropper or the like may be possible. Alternatively, there may be used known methods including a spin coating method, a spraying method, a dip coating and the like.

In the method for fabricating the structure according to the invention, after coating of the liquid, a film or sheet-shaped material may be placed on the liquid to keep the thickness of the liquid constant. The film or sheet-shaped material may be either transparent or opaque.

It will be noted that the method for fabricating the structure according to the invention may includes, prior to the liquid coating step, the step of forming a film of a light responsive material on the surface of a substrate (e.g. a substrate made of glass, an acrylic resin, amorphous carbon, crystalline silicone, polycrystalline silicon, amorphous silicon or the like) (called "light responsive material film-forming step). The light responsive material film-forming step can be carried out by coating, on the above substrate, a solution dissolving a light responsive material, for example, in an appropriate organic solvent (an organic solvent capable of dissolving the light responsive material such as of tetrahydrofuran (THF), chloroform, cyclohexanone, acetone or the like) according to a known method such as a spin coating method, a spraying method, a dip coating method or the like.

The film of the light responsive material formed by the above method may be annealed. The "annealing" is a process wherein the solvent contained in the film of the light responsive material is evaporated by heating. For the heating temperature for annealing, appropriate favorable conditions may be adopted. The heating temperature for annealing may be, for example, approximately a glass transition temperature of the light responsive material, or may be in the vicinity of room temperature. The annealing may be carried out under atmospheric conditions or under reduced conditions.

The film of the light responsive material formed in this way may be immediately subjected to the liquid coating step or may be subjected to the liquid coating step after allowing it to stand for a while. The ambient temperature for the standing may be either room temperature, or not lower or not higher than room temperature. The film may be allowed to stand under humidity-controlled conditions, if necessary.

Fig. 14 shows the results of an investigation on the relation between the annealing time and the profile of the tubular bodies formed. Figs. 14(a), (b) and (c) are, respectively, AFM photographs of the structures formed after annealing of a light responsive material after the formation step of a light responsive material film under vacuum at 80°C for 10 minutes, 60 minutes and 20 hours. A longer annealing time resulted in a smaller diameter of the openings of the tubular bodies, with the tendency that an angle relative to the horizontal plane of the inner wall of the barnacle-shaped body came close to verticality (i.e. the body became stumpy). Although data are not shown, a longer standing time before the liquid coating step and a longer annealing time lead to a smaller diameter of the openings of the tubular bodies, with the tendency that an angle relative to the horizontal plane of the inner wall of the barnacle-shaped body came close to verticality (i.e. the body became stumpy). Accordingly, it was suggested that when the annealing time and standing time were appropriately controlled, the profile of the structure could be controllable.

[Light irradiation step]

The light irradiation step is one wherein light is irradiated on the light responsive material on which the liquid has been coated in the liquid coating step. In other words, this is a step wherein after the particulate material-free liquid (which may be sometimes referred to as "liquid" hereinafter) has been coated on the surface of the light responsive material, light is irradiated before the liquid is dried up.

The light irradiation step may be carried out after the light responsive material having subjected to the liquid coating step is dried to such an extent that the coated liquid has not been completely evaporated. By controlling a residual amount of the liquid present on the light responsive material at the time of the light irradiation, the profile of the structure (such as a diameter of the openings of the tubular bodies, a density of the tubular bodies, a height of the tubular bodies, a depth of the recesses of the tubular bodies and the like) can be controlled. The manner of drying is not critical and the light responsive material after the liquid coating step may be placed and heated in a drying furnace, air-dried such as with a dryer, dried under reduced pressure, or naturally dried.

The light irradiation time may be appropriately controlled while taking into account the profile of a structure to be obtained, the sort and intensity of light and the like. The irradiation direction of light is not specifically limited, and light may be irradiated from a back side of the light responsive material (i.e. from a side where no liquid is coated) or light irradiation may be made from a side where the liquid has been coated.

An embodiment of the light irradiation step is now described with reference to Figs. 16 to 18. The invention is not limited to this embodiment. Fig. 16 shows a slide glass substrate, on which a light responsive material film (an azobenzene polymer thin film) is formed and a liquid is further coated thereon. An aluminum mask (provided with circular holes) contacts with a side of the slide glass opposite to the side formed with the azobenzene polymer thin film. Light from an LED lamp is concentrated with a simple condensing lens and irradiated to the azobenzene polymer thin film via the holes of the aluminum mask. Tubular bodies are formed in the region where the azobenzene polymer thin film is irradiated with the light. The embodiment shown in Fig. 16 is one wherein light is irradiated from the substrate side.

In an embodiment of Fig. 17, a liquid is coated onto a slide glass (cover), on which spacers (e.g. slide glass pieces) are placed. A substrate on which a light responsive material film (azobenzene polymer thin film) has been formed is placed over the slide glass substrate through the spacers so that the azobenzene polymer is brought into contact with the liquid. An aluminum mask (provided with circular holes) is provided in contact with a side of the slide glass (cover) opposite to the liquid side. Light from an LED lamp is concentrated with a simple condensing lens and irradiated through the holes of the aluminum mask to the liquid and azobenzene polymer thin film in this order. Tubular bodies are formed in the region where the light is irradiated on the azobenzene polymer thin film. The embodiment shown in Fig. 17 is one wherein light is irradiated from the liquid side.

It will be noted that the embodiment of irradiating light from the liquid side on the azobenzene polymer thin film may be such an embodiment as shown Fig. 18. More particularly, light from an LED lamp, which is concentrated with a simple condensing lens, is irradiated on a substrate forming a light responsive material film (azobenzene polymer thin film) on a slide glass substrate.

If the light irradiation time is made short, there can be made a structure having such a profile that part of tires embedded in the ground is pulled up (e.g. a crescent shape) as shown in Fig. 15. The invention embraces all the structures fabricated according to the methods for fabricating a structure according to the invention and thus, the crescent-shaped structure is also within the scope of the invention. Here, Fig. 15 (a) is an AFM image of a structure formed one second after light irradiation, (b) is an AFM image of a structure formed five seconds after light irradiation, (c) is an AFM image of a structure formed 10 seconds after light irradiation, (d) is an AFM image of a structure formed 15 seconds after light irradiation, (e) is an AFM image of a structure formed 25 seconds after light irradiation, (f) is an AFM image of a structure formed 30 seconds after light irradiation, (g) is an AFM image of a structure formed 45 seconds after light irradiation, (h) is an AFM image of a structure formed 60 seconds after light irradiation, and (i) is an AFM image of a structure formed 300 seconds after light irradiation. The crescent-shaped structures are observed particularly in Figs. 15 (a) to (d).

As to the irradiation light, unless mismatching occurs in combination with materials undergoing optical deformation, arbitrary irradiation light such as propagating light, near-field light, evanescent light or the like may be used. As propagating light, natural light, laser beams and the like can be used. As with the case of propagating light, near-field light or evanescent light, its polarization characteristics can be utilized.

Although irradiation light is not critical with respect to its wavelength and light source, it is preferred to use a wavelength that is high in absorption efficiency of a material undergoing optical deformation. In this sense, UV light (wavelength of 300 to 400 nm) is preferred. Irradiation of visible light (wavelength of 400 to 600 nm) may be used. Where visible light is irradiated, it is preferred to use a light responsive material capable of optically fixing the above solid by irradiation of visible light. Alternatively, pulse light having high peak power may also be used.

The light irradiation step may be carried out immediately after the liquid coating step or may be carried out after allowing to stand for a while. The ambient temperature for the standing may be room temperature or not lower or not

higher than room temperature. If necessary, the standing may be made under humidity-controlled conditions.

[Corona discharge treatment step]

In the method for fabricating the structure of the invention, a step of carrying out a corona discharge treatment (corona discharge treatment step) after the light irradiation step may be included. When the corona discharge treatment is carried out, a desired structure can be obtained. For instance, the corona discharge treatment enables a raised portion of the tubular body to become higher. For the corona discharge treatment, there may be used an ordinary corona discharge treatment method (see, for example, Optics Letters, Vol. 26, No. 1, January 1, 2001, "Diffraction efficiency increase by corona discharge in photoinduced surface relief gratings on an azo polymer film"). The intensity and treating time of corona discharge may be so controlled as to obtain a desired structure.
As to the corona discharge treatment step, a corona discharge treatment may be performed, if necessary, so as to obtain a desired structure, but if not necessary, the corona discharge treatment may not be carried out.

[Step of making a mold of the structure]

The step of making a mold of the structure is one wherein a thermosetting resin or photocurable resin is coated to completely cover the surface of the structure obtained in the light irradiation step (hereinafter referred to as first structure), curing the thermosetting resin or photocurable resin, followed by removal thereof to make a second structure serving as a mold of the first structure.
For the thermosetting resin or photocurable resin, there may be used ordinarily employed resins. The thermosetting resins used are preferably those having a thermosetting temperature that is lower than a glass transition temperature of a light responsive material used. The thermosetting resins preferably usable in the practice of the invention include silicone resins, particularly, polydimethylsiloxanes, phenolic resins, urea resins, melamine resins, unsaturated polyester resins, epoxy resins, dillyalphthalate resins, polyurethanes, polyimides and the like. Usable photocurable resins include silicone resins, polyimides, acrylic resins and the like. As a thermosetting resin or photocurable resin, there may be used resins whose refractive index is controlled (e.g. polymer materials containing inorganic nanoparticles, organic nanoparticles or metal nanoparticles, and polymer materials subjected to molecular design so as to contain an atomic group having great polarizability (such as phosphorus, sulfur, selenium or the like)). The use of the refractive index-controlled resin is advantageous in that when a metal is vacuum deposited, a greater amplification effect of a localized surface plasmon resonance electric field is obtained (or tends to be obtained). Moreover, in the practice of the invention, the photocurable resins mean not only resins capable of being cured by absorption of light, but also those resins, such as azobenzene polymers, which exhibit increasing fluidity by absorption of light and are cured after interruption of light. Thus, an azobenzene polymer may be used in this step. The use of an azobenzene polymer whose refractive index in a visible light wavelength range is high is advantageous in that there is obtained a much greater amplification effect of the localized surface plasmon resonance electric field when a metal is vacuum deposited.
It will be noted that where a thermosetting resin and a photocurable resin are used in this step, foams may generate in the resin, so that it is preferred that a defoaming step is performed prior to or after the coating of the resin on the structure. The defoaming step is carried out, for example, by placing the resin under reduced pressure prior to curing. Preferably, the defoaming step is performed in a subsequent duplicating step.

[Step of duplicating a structure by use of the mold]

The duplicating step of a structure by use of the mold (second structure) is a step of obtaining a third structure, which is a duplicate of the first structure, by filling a thermosetting resin or photocurable resin in a portion of the second structure serving as a mold of the first structure and removing the thermosetting resin or photocurable resin after curing.
More particularly, a light (ultraviolet light) curable resin or a thermosetting resin is coated on the surface of the second structure, curing by irradiation of light (ultraviolet light) or by application of heat, and removing the cured resin to obtain a structure (third structure) according to this embodiment, which has substantially the same profile as the profile formed on the surface of the light responsive material. It will be noted that where an azobenzene polymer is used as a photocurable resin, the azobenzene polymer softened by irradiation of light is coated on the surface of the second structure and may be cured by stopping the light irradiation.
The third structure serving as a duplicate may include not only one that is the same as the structure formed on the light responsive material surface, but also one whose profile of the resulting structure differs depending on the transfer ratio, but with substantially the same configuration pattern of the planar section and inplane configuration pattern of the tubular body.
In the foregoing description, the procedure including the "step of making a mold of the structure" and "the step of duplicating a structure by use of a mold" has been illustrated, but not limited thereto. The structure may be fabricated

by the liquid coating step and the light irradiation step without resorting to the above steps.

In this regard, however, in case where the structure is duplicated by making a mold and forming on the light responsive material surface by use of the mold, the material for the structure is not limited to a light responsive material and mass production is easily enabled, thus a great effect being expected. That is, when the duplicating step of the structure by use the mold is repeated plural times, the structure can be simply mass-produced.

Although the fabrication method using a light responsive material has been illustrated hereinabove, reference should be made to Example 7 with respect to a fabrication method using a heat responsive material.

(V) Method for fabricating a chip for localized surface plasmon resonance sensor

The method for fabricating a chip for localized surface plasmon resonance sensor according to this embodiment includes the steps of fabricating a structure by the above-stated fabrication method of the structure according to the invention and covering the surface of the structure obtained in the step with a metal to form a metal layer having a profile reflected with the profile of the structure.

[Step of fabricating the structure]

The step of fabricating the structure is the same as the step of fabricating the structure by the method described in "(IV) Method for fabricating the structure." Accordingly, this step can be illustrated in the same way as illustrated in "(IV) Method for fabricating the structure."

[Step of forming the metal layer]

The step of forming the metal lays is one wherein the surface of the structure obtained in the step of fabricating the structure is covered with a metal to form a metal layer having a profile reflected with the profile of the structure. The metal layer can be formed, for example, by a known method such as a sputtering method, a vacuum deposition method or the like.

It will be noted that if the thickness of the metal layer deposited by sputtering or vacuum deposition is small, there may occur some case where the metal layer is not formed over the entire surface of the sensor chip. In this case, the chip for localized surface plasmon resonance sensor according to this embodiment is able to induce a localized surface plasmon resonance phenomenon.

[Example of a method for fabricating a chip for localized surface plasmon resonance sensor]

With reference to Fig. 4, an instance of a method for fabricating a chip for localized surface plasmon resonance sensor according to an embodiment of the invention is described in detail. In this regard, however, the invention should not be construed as limited to the instance. It will be noted that the following illustration may allow partly for the illustration of an embodiment of a method for fabricating a structure.

Initially, a solution of a light responsive material is coated onto a transparent substrate 46 by a spin coater or the like to form a layer 48 made of the light responsive material (light responsive material layer) (see Fig. 4 (a)).

Next, a particulate material-free liquid (water or the like) 54 is dropped over the light responsive material layer 48 (see Fig. 4(b)). After irradiation with given light from the side of the transparent substrate 46 (see Fig. 4(c)), the light responsive material layer 48 is naturally dried to make a substrate 49 having tubular bodies (see Fig. 4(d)).

Next, a thermosetting resin is dropped over the substrate 49 and is allowed to stand in a hot air oven and thus cured, followed by removal to obtain a thermoset resin substrate 50 having an inversely transferred profile of the tubular bodies (see Fig. 4(e)). A ultraviolet curable resin is dropped over the thermoset resin substrate 50 and removed after photocuring to provide a transparent substrate 51 having tubular bodies.

A metal such as Au, Ag or the like is deposited on the surface of the transparent substrate 51 having the tubular bodies thus obtained to form a metal layer 52 reflected with the tubular profile thereby obtaining a substrate portion of a chip 53 for sensor as shown in Fig. 4 (f).

It will be noted that if adhesion between the surface of the transparent substrate 51 having the tubular bodies and the metal layer 52 is unsatisfactory, an adhesion layer such as of Ti, Cr or the like may be provided between the transparent substrate 51 having the tubular bodies and the metal layer 52.

In order to obtain an adequate amount of reflected light, the metal layer 52 preferably has a thickness of not less than 10 nm. In this regard, however, too thick a metal layer 52 causes no transmission of incident light to occur or is not good at cost and fabrication throughput. Thus, the thickness is preferably at about 10 to 100 nm in practice.

As stated hereinabove, according to the method for fabricating the chip for localized surface plasmon resonance sensor of this embodiment, when a heat curable or photocurable resin is coated onto once fabricated structure having

tubular bodies on the light responsive material, cured and removed, a structure serving as a mold of the structure can be easily mass produced.

When a heat curable or photocurable resin is further coated onto the resulting structure serving as the mold and removed, there can be obtained a structure having the same profile as the surface profile on the light responsive material.

In the method for fabricating the chip for localized surface plasmon resonance sensor according to this embodiment, no large-scale apparatus is needed, so that little cost is involved in equipment investment along with excellent mass productivity. Thus, a sensor chip of high accuracy can be fabricated at low costs.

It will be noted that in the foregoing description, the case where the transparent substrate 46 is used as a substrate onto which a light responsive material is coated has been illustrated although not limitative thereto. If light is irradiated on a light responsive material side, a non-translucent substrate may also be used.

In the foregoing description, the transparent substrate 51 is used as the finally obtained substrate of the chip for localized surface plasmon resonance sensor, but not limited thereto. If the transmittance is not measured by the chip for localized surface plasmon resonance sensor, a non-translucent substrate may also be used.

Further, in the foregoing description, there has been illustrated such a case where a mold for the structure is made by use of a thermosetting resin and a ultraviolet light curable resin is subsequently coated on the mold to make a final substrate of the chip for localized surface plasmon resonance sensor, but not limited thereto. For instance, a photocurable resin such as a UV light curable resin or the like may be used to make a mold for the structure, followed by subsequent coating of a thermosetting resin onto the mold to make a final substrate of a chip for localized surface plasmon resonance sensor. Alternatively, either a photocurable resin such as an ultraviolet curable resin or a thermosetting resin may be used in both steps. Still alternatively, an azobenzene polymer may be used for making a mold for the structure and a substrate of the chip for localized surface plasmon resonance sensor.

It will be noted that with existing chips for localized surface plasmon resonance sensor, a substrate surface has to be chemically modified so as to fix metal nano fine particles on the substrate, so that the metal nano fine particle-fixing step is complicated, thus making it difficult to efficiently fabricate the chips. In contrast thereto, in the method for fabricating a chip for localized surface plasmon resonance sensor according to this embodiment, the metal layer can be continuously formed and can thus be fabricated in an efficient manner. More particularly, a metal film is formed, by a process such as of vacuum deposition, sputtering or the like, on a substrate having a planar section and tubular bodies and obtained by dropping a liquid over a light responsive material and being irradiated with light of such a wavelength as to induce material transfer associated with photoisomerization, there can be efficiently formed a profile having the planar section and tubular bodies.

In recent years, a nanoimprinting method has been often used for the formation of microrecesses or microprotrusions on the order of submicrons to several tens of nanometers. However, the nanoimprinting method needs a stamper and an imprinting apparatus. Although mass productivity is excellent, initial costs of equipment investment are high, thus not saying that production is enabled at low costs. In addition, the stamper is formed with only either of recesses or protrusions and a difficulty is involved in making a stamper having both protrusions and recesses together. Releasability from the stamper on the size order of about submicrons is not easy and thus it is difficult to manufacture a complicated profile according to the nanoimprinting method.

It will be noted that the localized surface plasmon resonance sensor can be fabricated according to known techniques making use of the chip for localized surface plasmon resonance sensor.

Examples

The invention is described in more detail by way of examples, which should not be construed as limiting the invention thereto.

[Example 1: Structure fabrication-1]

Such POT1 as indicated before was used as a light responsive material and a thin film of this azo polymer derivative (thickness: 100 nm) was formed on a glass substrate according to a spin coating method.

The azo polymer derivative thin film thus formed was annealed (at 150°C for 10 minutes (normal pressure)).

1 cc of pure water was dropped over the azo polymer derivative thin film, followed by irradiation with light of a wavelength of 470 nm at an intensity of 40 mW/cm$^2$ for five minutes.

After the irradiation, pure water was removed and the azo polymer derivative thin film after the light irradiation was air-dried, followed by observation of the surface with AFM. The results are shown in Fig. 5.

Tubular bodies of the resulting structure had an average diameter of 690 nm and a depth (average value) of 180 nm, a ratio (A/B) of inner diameter A of the openings of the tubular bodies and inner diameter B at the midpoint of the depth from the openings of the tubular bodies was found at 1.78. The dispersion density in the planar section of the

tubular bodies of the resulting structure was at 25,000 bodies per 100 μm square.

Gold was vacuum deposited on the surface of the resulting structure in a thickness of 100 nm according to a vacuum deposition method to provide a sensor chip. The measurement of transmission spectrum of the sensor chip revealed a plasmon resonance-derived absorption peak. Each liquid having different refractive indices (water, triethylene glycol) was dropped on the surface, followed by measurement of transmission spectrum. A graph normalized with peak top values is shown in Fig. 6.

When the sensitivity of the sensor chip was measured by calculating a variation in peak shift amount of the transmission spectrum relative to the refractive indices of the liquids on the surface of the sensor chip, it was at 154 RIU (Refractive Index Unit). Thus, it was found that the sensor chip of this example was of a transmission type and could be a plasmon resonance sensor of high sensitivity.

[Example 2: Structure fabrication-2]

Such an azo polymer derivative POT1 as used in Example 1 was provided as a light responsive material and coated onto a transparent substrate in a thickness of 50 nm by means of a spin coater to form an azo polymer derivative thin film.

The azo polymer derivative thin film thus formed was annealed (at 150°C for 10 minutes (at a normal pressure)).

1 cc of pure water was dropped over the azo polymer derivative thin film and irradiated with light of a wavelength of 470 nm at an intensity of 30 mW/cm$^2$ for five minutes.

After the irradiation, the pure water was removed and the azo polymer derivative thin film after the light irradiation was air-dried, followed by observation of the surface with AFM. The results are shown in Fig. 7.

The tubular bodies of the resulting structure had an average diameter of 350 nm and a depth (average value) of 170 nm, and a ratio (A/B) of inner diameter A of the openings of the tubular bodies and inner diameter B at the midpoint of the depth from the openings of the tubular bodies was at 1.20. The dispersion density of the tubular bodies in the planar section of the resulting structure was at 70,000 bodies per 100 μm square.

Gold was vacuum deposited on the surface of the resulting structure in a thickness of 100 nm according to a vacuum deposition method to provide a sensor chip. The measurement of the transmission spectrum of the sensor chip revealed a plasmon resonance-derived absorption peak. Each liquid (water, polydimethylsiloxane, triethylene glycol and glyceryl diglycidyl) having different refractive indices was dropped on the surface of the sensor chip and subjected to measurement of transmission spectrum. The graph normalized with respect to the peak top values is shown in Fig. 8. In Fig. 9, there is shown a graph wherein the refractive indices of the liquids dropped on the sensor chip is taken as an abscissa and a shift amount of the peak wavelength of the plasmon resonance absorption-derived spectrum is taken as an ordinate. The data of Fig. 9 were subjected to straight-line approximation and the sensitivity of the sensor chip was calculated from the inclination of the straight line and found to be at 204 RIU. Thus, the sensor chip of this example was found to be of the transmission type and also to serve as a plasmon resonance sensor of high sensitivity.

[Example 3: Structure fabrication-3]

Structures were made in the same manner as in Example 2. Of the thus formed structures, arbitrarily chosen four structures were subjected to profile measurement (Experiment Lot No. 302-1).

The procedure of Experiment Lot No. 302-1 was repeated except that after annealing (at 150°C for 10 minutes (at a normal pressure)) prior to light irradiation, samples were allowed to stand at room temperature for 12 hours. Among the structures formed in this manner, arbitrarily chosen two structures were subjected to profile measurement (Experiment Lot No. 303-1).

These results are shown in Table 1.

[Table 1]

| Experiment Lot No. | 302-1 | | | | 303-1 | |
|---|---|---|---|---|---|---|
| Tubular body No. | 1 | 2 | 3 | 4 | 5 | 6 |
| Thickness of azobenzene polymer thin film (nm) | 50 | | | | 50 | |
| Inner diameter A of openings of tubular bodies (nm) | 450 | 469 | 410 | 371 | 371 | 371 |
| Inner diameter B at the midpoint of the depth from openings of tubular bodies (nm) | 352 | 390 | 273 | 313 | 273 | 234 |
| Depth (nm) | 185 | 217 | 200 | 199 | 194 | 164 |

(continued)

| Experiment Lot No. | 302-1 | | | | 303-1 | |
|---|---|---|---|---|---|---|
| Tubular body No. | 1 | 2 | 3 | 4 | 5 | 6 |
| A/B | 1.28 | 1.20 | 1.50 | 1.19 | 1.36 | 1.59 |

The invention should not be construed as limited to the above examples and may be altered in various ways within the range defined in claims, and embodiments obtained by appropriate combinations of the technical means set forth in the different embodiments are also included within the technical scope of the invention.

[Example 4: Biosensing-1 using a sensor chip]

The POT1 indicated before was used as a light responsive material. A glass substrate was subjected to ultrasonic cleaning in a chloroform solvent for one minute, after which the above azo polymer derivative thin film (thickness: 50 nm) was formed on the glass substrate according to a spin coating method.

The azo polymer derivative thin film thus formed was annealed (at 150°C for 10 minutes (at a normal pressure)).

1 cc of pure water dropped on the azo polymer derivative thin film and irradiated with light of a wavelength of 470 nm at an intensity of 40 $mW/cm^2$ for five minutes.

After the light irradiation, the pure water was removed and the azo polymer derivative thin film after the light irradiation was air-dried.

100 nm thick gold was vacuum deposited on the surface of the resulting structure by a vacuum deposition method to provide a sensor chip. The sectional structure of the sensor chip was observed at arbitrary portions thereof by the cross-sectional TEM method, with the results shown in Figs. 19 to 25. Fig. 19 is a planar SEM image of the sensor chip, Fig. 20 is a sectional TEM image of the sensor chip, taken along line P-P' of Fig. 19, Fig. 21 is a sectional TEM image of the sensor chip, taken along line Q-Q' of Fig. 19, Fig. 22 is a sectional TEM image of the sensor chip, taken along line R-R' of Fig. 19, Fig. 23 is a sectional TEM image of the sensor chip, taken along line S-S' of Fig. 19, Fig. 24 is a sectional TEM image of the sensor chip, taken along line T-T' of Fig. 19, and Fig. 25 is a sectional TEM image of the sensor chip, taken along line U-U' of Fig. 19. It will be noted that in Figs. 20 to 25, each of the substrate, the tubular bodies and the metal layer is shown.

The profile of the tubular bodies shown in Fig. 20 was measured with AFM, revealing that the depth was at 176 nm and the ratio (A/B) of inner diameter A (587 nm) of the openings of the tubular bodies and inner diameter B (529 nm) at the midpoint of the depth from the openings of the tubular bodies was at 1.11.

Likewise, the profile of the tubular bodies shown in Fig. 21 was measured with AFM, revealing that the depth was at 128 nm and the ratio (A/B) of inner diameter A (503 nm) of the openings of the tubular bodies and inner diameter B (423 nm) at the midpoint of the depth from the openings of the tubular bodies was at 1.19.

The profile of the tubular bodies shown in Fig. 22 was measured with AFM, revealing that the depth was at 148 nm and the ratio (A/B) of inner diameter A (498 nm) of the openings of the tubular bodies and inner diameter B (385 nm) at the midpoint of the depth from the openings of the tubular bodies was at 1.29.

The profile of the tubular bodies shown in Fig. 23 was measured with AFM, revealing that the depth was at 137 nm and the ratio (A/B) of inner diameter A (394 nm) of the openings of the tubular bodies and inner diameter B (319 nm) at the midpoint of the depth from the openings of the tubular bodies was at 1.23.

The profile of the tubular bodies shown in Fig. 24 was measured with AFM, revealing that the depth was at 136 nm and the ratio (A/B) of inner diameter A (418 nm) of the openings of the tubular bodies and inner diameter B (297 nm) at the midpoint of the depth from the openings of the tubular bodies was at 1.40.

The profile of the tubular bodies shown in Fig. 25 was measured with AFM, revealing that the depth was at 208 nm and the ratio (A/B) of inner diameter A (930 nm) of the openings of the tubular bodies and inner diameter B (809 nm) at the midpoint of the depth from the openings of the tubular bodies was at 1.15.

An antibody of C-reactive protein (CRP) was fixed on the sensor chip surface obtained above at a concentration of 1 μg/mL, followed by blocking with bovine serum albumin (BSA) having a concentration of 1 μg/mL. CRP antigen solutions (solvent: phosphate-buffered physiological saline solution having a pH of 7.4) having concentrations of 10 pg/mL, 100 pg/mL and 1 ng/mL were, correspondingly, provided. Initially, the CRP antigen solution having a concentration of 10 pg/mL was dropped on the sensor chip surface to conduct the antigen-antibody reaction of CRP (reaction time: 15 minutes). Thereafter, the sensor chip surface was cleaned with a phosphate-buffered physiological saline solution and pure water, followed by measurement of transmission spectrum of the sensor chip. As a result, where no antigen was reacted (hereinafter referred to as "blank"), the peak wavelength was at 642.1 nm, whereas when the antigen was reacted, the peak wavelength was found at 642.8 nm, thus the peak wavelength being shifted to a longer wavelength side by 0.7 nm (see Fig. 26).

Next, the CRP antigen solution of 100 pg/mL was dropped on the sensor chip surface, followed by measurement of transmission spectrum on the sensor chip surface similarly after the antigen-antibody reaction, whereupon it was found that the peak wavelength was at 643.3 nm, which was shifted to a longer wavelength side by 1.2 nm upon comparison with the blank test (see Fig. 26).
Further, the CRP antigen solution of 1 ng/mL was dropped on the sensor chip surface, followed by measurement of transmission spectrum on the sensor chip surface similarly after the antigen-antibody reaction, whereupon it was found that the peak wavelength was at 644.1 nm, which was shifted to a longer wavelength side by 1.9 nm upon comparison with the blank test (see Fig. 26).
Accordingly, it was found that the use of the sensor chip of this example enabled CRP to be detected even at such a very low concentration as 10 pg/mL.
It will be noted that CRP is known as a marker for inflammatory disease.

[Example 5: Biosensing-2 using a sensor chip]

Detection of fibrinogen, which is a blood coagulation factor, was made by use of such a sensor chip as obtained in Example 4.
A fibrinogen antibody having a concentration of 1 μg/ml was fixed on the sensor chip surface obtained above, followed by blocking with bovine serum albumin (BSA) at a concentration of 1 μg/mL. Fibrinogen antigen solutions (solvent: phosphate-buffered physiological saline solution having a pH of 7.4) having concentrations of 10 pg/mL, 100 pg/mL and 1 ng/mL were, correspondingly, provided. Initially, the CRP antigen solution having a concentration of 10 pg/mL was dropped on the sensor chip surface to conduct the antigen-antibody reaction of fibrinogen (reaction time: 15 minutes). Thereafter, the sensor chip surface was cleaned with a phosphate-buffered physiological saline solution and pure water, followed by measurement of transmission spectrum of the sensor chip. As a result, where no antigen was reacted (hereinafter referred to as "blank"), the peak wavelength was at 662.0 nm, whereas when the antigen was reacted, the peak wavelength was found at 663.5 nm, thus the peak wavelength being shifted to a longer wavelength side by 1.5 nm (see Fig. 27).
Next, the fibrinogen antigen solution of 100 pg/mL was dropped on the sensor chip surface, followed by measurement of transmission spectrum on the sensor chip surface similarly after the antigen-antibody reaction, whereupon it was found that the peak wavelength was at 665.5 nm, which was shifted to a longer wavelength side by 3.5 nm upon comparison with the blank test (see Fig. 27).
Further, the CRP antigen solution of 1 ng/mL was dropped on the sensor chip surface, followed by measurement of transmission spectrum on the sensor chip surface similarly after the antigen-antibody reaction, revealing that the peak wavelength was at 667.0 nm, which was shifted to a longer wavelength side by 5 nm upon comparison with the blank test (see Fig. 27).
Accordingly, it was found that the use of the sensor chip of this example enabled fibrinogen to be detected even at such a very low concentration as 10 pg/mL.

[Example 6: Biosensing-3 using a sensor chip]

Using such a sensor chip as obtained in Example 4, leptin used as a marker for diabetic disease was detected.
A leptin antibody having a concentration of 1 μg/ml was fixed on the sensor chip surface obtained above, followed by blocking with bovine serum albumin (BSA) at a concentration of 1 μg/mL. Leptin antigen solutions (solvent: phosphate-buffered physiological saline solution having a pH of 7.4) having concentrations of 100 pg/mL and 10 ng/mL were, correspondingly, provided. Initially, the leptin antigen solution having a concentration of 100 pg/mL was dropped on the sensor chip surface to conduct the antigen-antibody reaction of leptin (reaction time: 15 minutes). Thereafter, the sensor chip surface was cleaned with a phosphate-buffered physiological saline solution and pure water, followed by measurement of transmission spectrum of the sensor chip. As a result, where no antigen was reacted (hereinafter referred to as "blank"), the peak wavelength was at 653.0 nm, whereas when the antigen was reacted, the peak wavelength was found at 668.0 nm, thus the peak wavelength being shifted to a longer wavelength side by 1.5 nm (see Fig. 28).
Next, the leptin antigen solution of 10 ng/mL was dropped on the sensor chip surface, followed by measurement of transmission spectrum on the sensor chip surface similarly after the antigen-antibody reaction, revealing that the peak wavelength was at 689.5 nm, which was shifted to a longer wavelength side by 3.0 nm upon comparison with the blank test (see Fig. 28).
Accordingly, it was found that the use of the sensor chip of this examples enabled leptin to be detected even at such a very low concentration as 100 pg/mL.

[Example 7: Fabrication example of a structure and a chip for localized surface plasmon resonance sensor by use of atactic polystyrene]

Atactic polystyrene (molecular weight: 2,000 g/mol) was used a s heat responsive material.
A 2 wt% atactic polystyrene-toluene solution was spin coated onto a substrate (silicon wafer) to form a thin film (thin film thickness: 10 nm).
The substrate on which the thin film had been formed was heated in atmosphere of air at 70°C for 60 minutes and thus annealed.
The resultant structure was measured with AFM with respect to the profile of the tubular bodies, revealing that the depth was at 17 nm and a ratio (A/B) of inner diameter A (547 nm) of the openings of the tubular bodies and inner diameter B (539 nm) at the midpoint of the depth from the openings of the tubular bodies was at 1.20.
100 nm thick gold was vacuum deposited on the surface of the structure obtained above according to a vacuum deposition method to provide a chip for localized surface plasmon resonance sensor.
The electric field concentration intensity of the chip for localized surface plasmon resonance sensor was simulated according to an FDTD (Finite Difference Time Domain) method.
The results are shown in Fig. 29. According to Fig. 29, it was confirmed that the electric field of the chip for localized surface plasmon resonance sensor made from the structure obtained in this example was amplified (see the portion surrounded by circle in Fig. 29), clearly demonstrating that the chip could be utilized as a chip for localized surface plasmon resonance sensor. It was also confirmed that the materials used for the structure constituting the chip for localized surface plasmon resonance sensor were not specifically limited.

Industrial Applicability

The invention has such an effect that there can be provided a structure favorably utilizable as a chip for a localized surface plasmon resonance sensor of high sensitivity or the like and also a method for fabricating same.
Accordingly, the invention can be conveniently used in the industries making use, for example, of biosensors.

Explanation of Reference Numerals

18 Localized surface plasmon resonance sensor
19 Substrate
20 Metal layer
21 Linear polarized light
22 Electric field
24 Localized surface plasmon resonance sensor (localized SPR sensor)
25 Light source
26 Collimator lens
27 Collimator plate
28 Beam splitter
29 Spectroscope
30 Chip for localized surface plasmon resonance sensor (chip for localized SPR sensor)
31 Data processor
32 Measurement region
33 Photodetector
34 Localized surface plasmon resonance sensor (localized SPR sensor)
45 Tubular body
46 Transparent substrate (substrate)
48 Light responsive material layer
49 Substrate having tubular bodies (structure, first structure)
50 Thermosetting resin substrate (mold of structure, second structure)
51 Transparent substrate (third structure)
52 Metal layer
53 Sensor chip

## Claims

1. A structure, **characterized by** comprising
a planar section and tubular bodies in such a way that the tubular bodies are vertically arranged so that openings thereof open at a planar surface of said planar section, in which
an average inner diameter of the openings of said tubular bodies is within a range of from 5 nm to 2,000 nm;
a ratio (A/B) of inner diameter A of the openings of said tubular bodies to inner diameter B at the midpoint of a depth from the openings of said tubular bodies is within a range of from 1.00 to 1.80; and
said tubular bodies have an aspherical bottom.

2. The structure as defined in Claim 1, **characterized in that** the above ratio (A/B) is within a range of from 1.00 to 1.50.

3. The structure as defined in Claim 1 or 2, **characterized in that** a dispersion density of said tubular bodies in the planar section is within a range of from 1 to 500,000 bodies per 100 μm square.

4. The structure as defined in any one of Claims 1 to 3, wherein said structure is made of a stimulation responsive material.

5. The structure as defined in Claim 4, wherein said stimulation responsive material includes a heat responsive material or light responsive material.

6. The structure as defined in Claim 4, wherein said stimulation responsive material includes a light responsive material.

7. The structure as defined in Claim 6, **characterized in that** said stimulation responsive material contains an azo polymer derivative.

8. The structure as defined in Claim 6, **characterized in that** said light responsive material includes an azo polymer derivative having an azobenzene group at the main chain and/or side chain thereof.

9. A chip for localized surface plasmon resonance sensor, **characterized by** forming the structure defined in any one of Claims 1 to 8 on a substrate, and further forming a metal layer so as to cover at least a part of the surface of said structure and reflect a surface structure of said structure.

10. A chip for localized surface plasmon resonance sensor, **characterized by** forming, on a substrate, a structure including a planar section and tubular bodies in such a way that the tubular bodies are vertically arranged so that openings thereof open at a planar surface of said planar section, in which an average inner diameter of the openings of said tubular bodies is within a range of from 5 nm to 2,000 nm; a ratio (A/B) of inner diameter A of the openings of said tubular bodies to inner diameter B at the midpoint of a depth from the openings of said tubular bodies is within a range of from 1.00 to 1.80; and said tubular bodies have an aspherical bottom, and forming a metal layer so as to cover at least a part of the surface of said structure and reflect a surface structure of said structure.

11. The chip for localized surface plasmon resonance sensor as definced in Claim 10, **characterized in that** the ratio (A/B) is within a range of from 1.00 to 1.50.

12. The chip for localized surface plasmon resonance sensor as defined in Claim 10 or 11, wherein said structure is made of a stimulation responsive material.

13. The chip for localized surface plasmon resonance sensor as defined in Claim 12, wherein said stimulation responsive material includes a heat responsive material or light responsive material.

14. The chip for localized surface plasmon resonance sensor as defined in Claim 13, wherein said stimulation material includes a light responsive material.

15. The chip for localized surface plasmon resonance sensor as defined in any one of Claims 9 to 14, **characterized in that** said metal layer has a thickness within a range of from 10 nm to 500 nm.

16. The chip for localized surface plasmon resonance sensor as defined in any one of Claims 9 to 15, **characterized by** forming an organic molecular layer for fixing biomolecules on the surface of said metal layer.

**17.** The chip for localized surface plasmon resonance sensor as defined in Claim 16, **characterized in that** said organic molecular layer contains molecules whose length from the metal layer surface ranges from 50 nm to 200 nm and molecules whose length from the metal layer surface ranges from 1 nm to less than 50 nm.

**18.** The chip for localized surface plasmon resonance sensor as defined in any one of Claims 9 to 17, wherein said metal layer is made of Au, Ag or an alloy thereof.

**19.** A localized surface Plasmon resonance sensor, **characterized by** comprising
the chip for localized surface plasmon resonance sensor defined in any one of Claims 9 to 18;
a light source irradiating light on said chip for localized surface plasmon resonance sensor; and
a photodetector receiving light reflected from or transmitted though said chip for localized surface plasmon resonance sensor.

**20.** The localized surface plasmon resonance sensor as defined in Claim 19, **characterized by** passing lights of two or more wavelengths vertically to the surface of said chip for localized surface plasmon resonance sensor and measuring, with said photodetector, reflectances of the lights of the respective wavelengths reflected at said chip for localized surface plasmon resonance sensor, transmittances at the respective wavelengths transmitted through said chip for localized surface plasmon resonance sensor, or light intensities at the respective wavelengths reflected or transmitted.

**21.** A method for fabricating a structure, **characterized by** comprising:

a liquid coating step of coating a particulate material-free liquid on a light responsive material; and
a light irradiation step of irradiating light on the light responsive material on which the liquid has been coated in the above liquid coating step.

**22.** The method for fabricating the structure as defined in Claim 21, **characterized in that** said liquid is at least one selected from the group including water, an alcohol and an organic solvent capable of dissolving the light responsive material.

**23.** A method for fabricating a structure, **characterized by** comprising:

(i) making a first structure through a liquid coating step of coating a particulate material-free liquid on a light responsive material and a light irradiation step of irradiating light on the light responsive material on which the liquid has been coated in the liquid coating step; and
(ii) making a second structure serving as a mold of the first structure by coating a thermosetting resin or photocurable resin so as to completely cover a surface of said first structure, and removing said thermosetting resin or photocurable resin after curing thereof; and
(iii) obtaining a third structure that is a duplicate of the first structure by filling a thermosetting resin or photocurable resin in a portion of said second structure serving as a mold of the first structure and removing the thermosetting resin or photocurable resin after curing thereof.

**24.** The method for fabricating the structure as defined in Claim 23, **characterized by** repeating the above step (iii).

**25.** A method for fabricating a chip for localized surface plasmon resonance sensor, **characterized by** comprising:

a step of fabricating a structure according to the method for fabricating a structure defined in any one of Claims 21 to 24; and
a step of forming a metal layer having a profile reflected with the profile of said structure by covering a surface of the structure obtained in the above step with a metal.

**26.** A structure, **characterized by** being fabricated by the method for fabricating a structure defined in Claim 21 or 22.

FIG.1

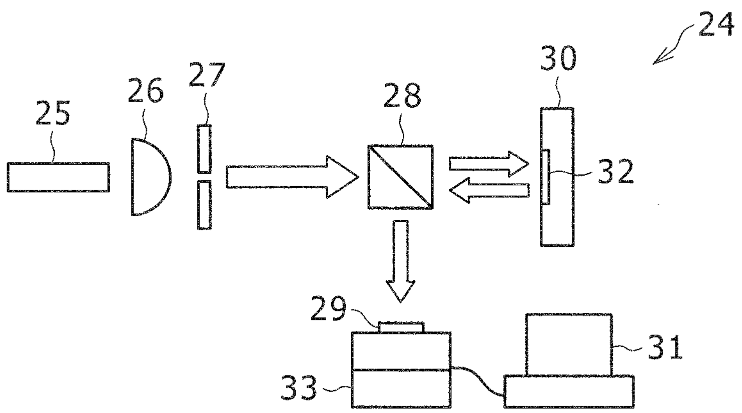


FIG.2

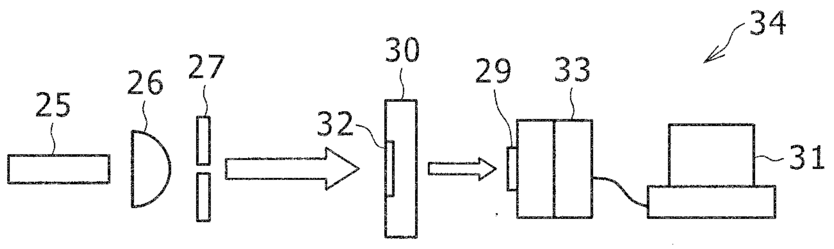

FIG. 3

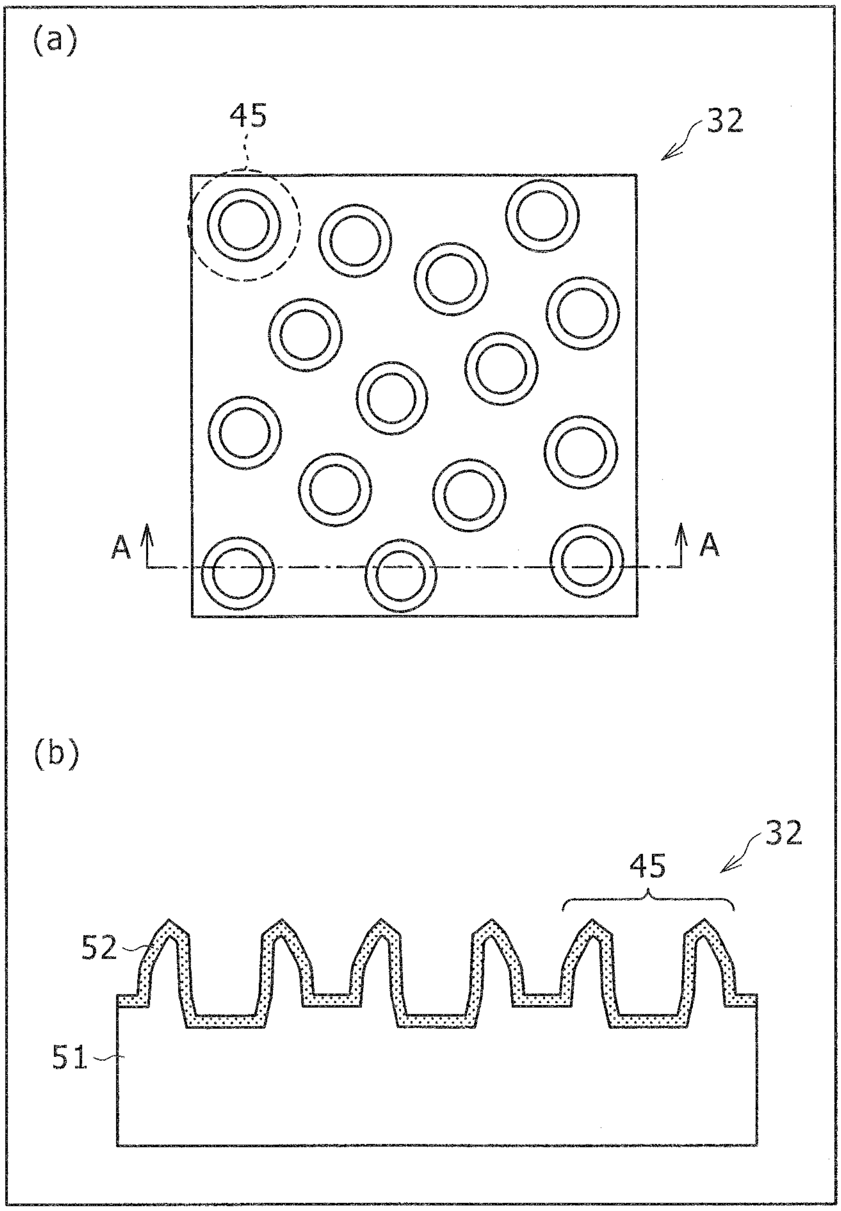

FIG. 4

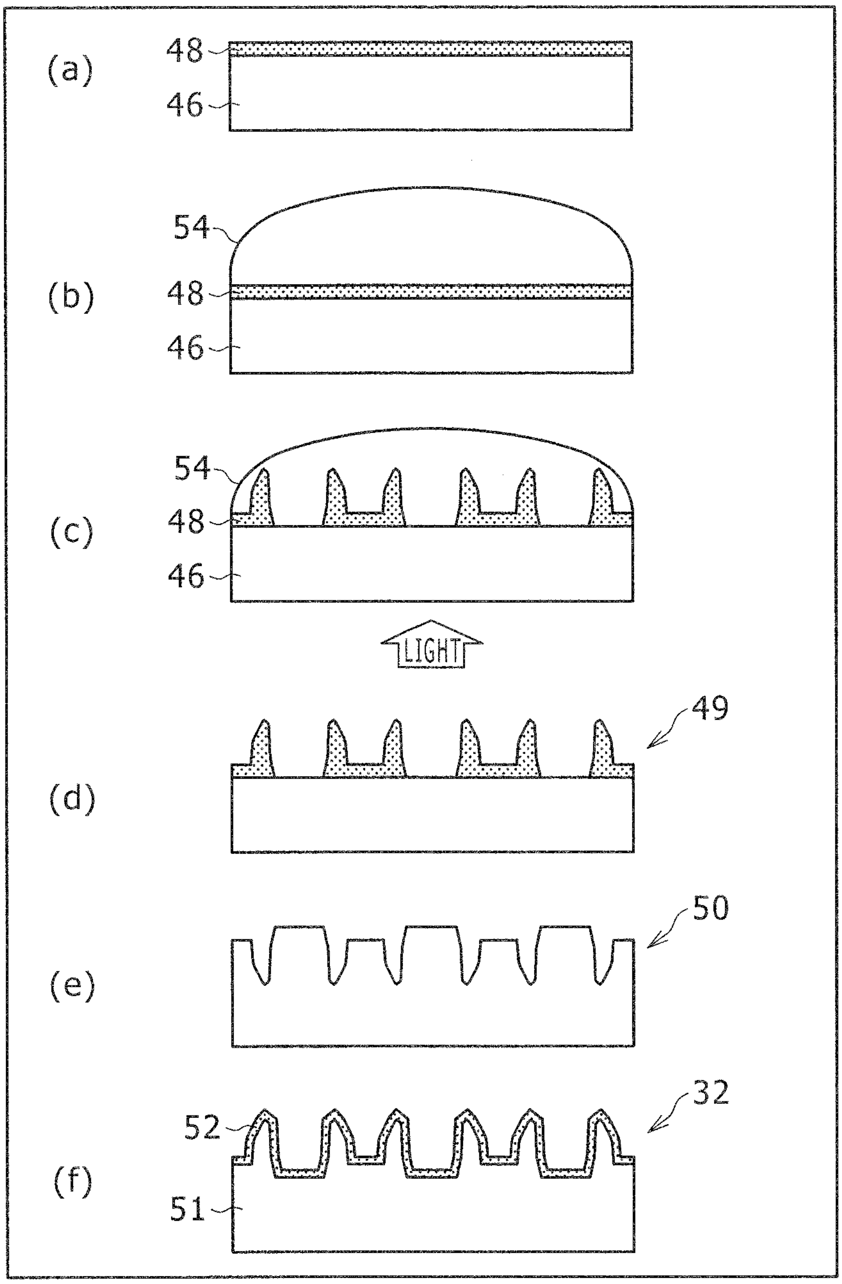

FIG. 5

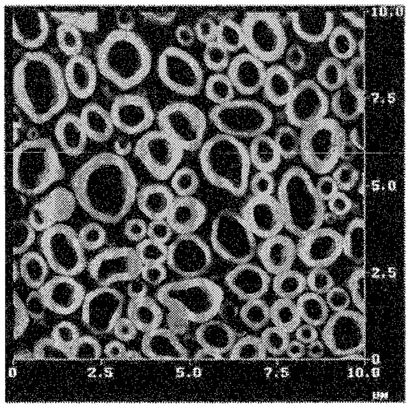


FIG. 6

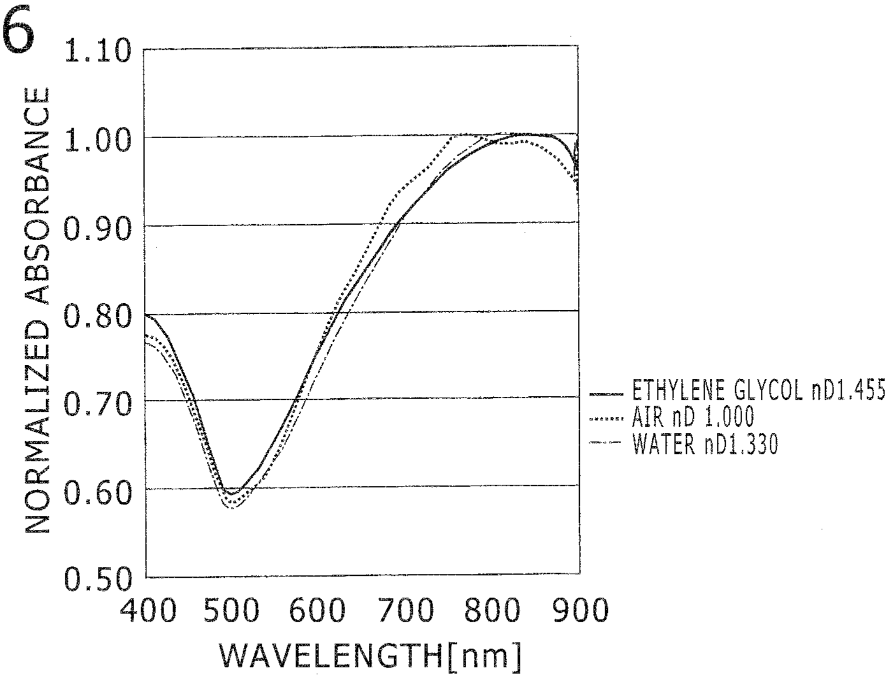


FIG. 7

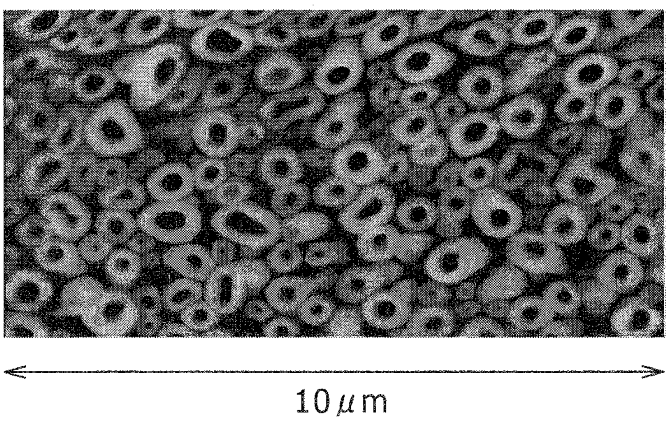

FIG.8

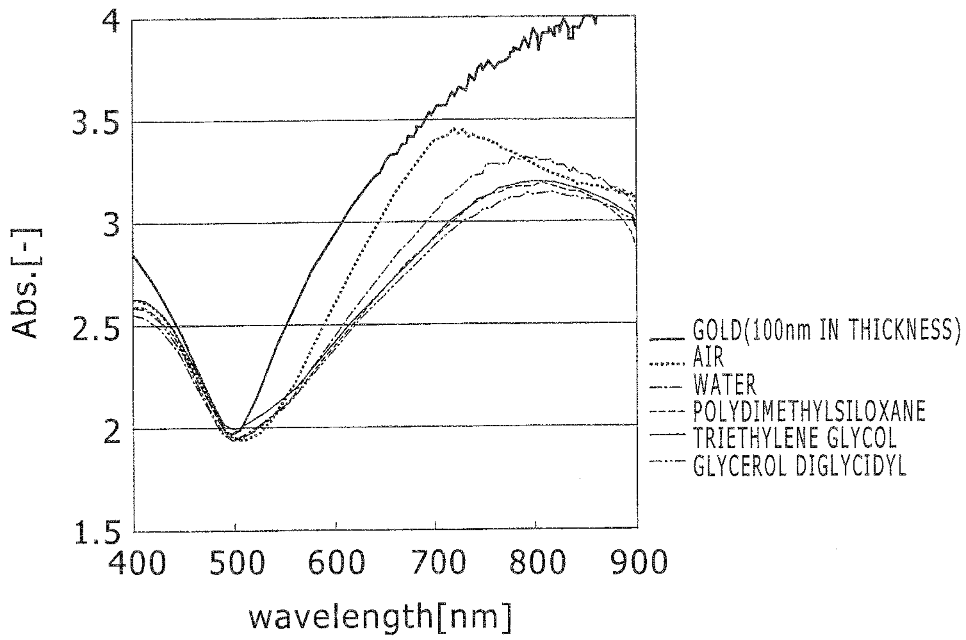
4
3.5
3
2.5
2
1.5
Abs.[-]
400
500
600
700
800
900
wavelength[nm]
GOLD(100nm IN THICKNESS)
AIR
WATER
POLYDIMETHYLSILOXANE
TRIETHYLENE GLYCOL
GLYCEROL DIGLYCIDYL

FIG.9

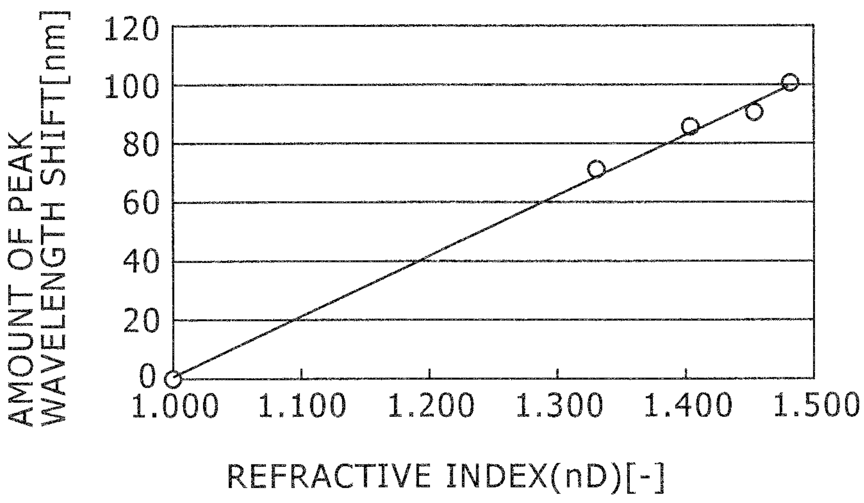
120
100
80
60
40
20
0
AMOUNT OF PEAK WAVELENGTH SHIFT[nm]
1.000
1.100
1.200
1.300
1.400
1.500
REFRACTIVE INDEX(nD)[-]

FIG. 10

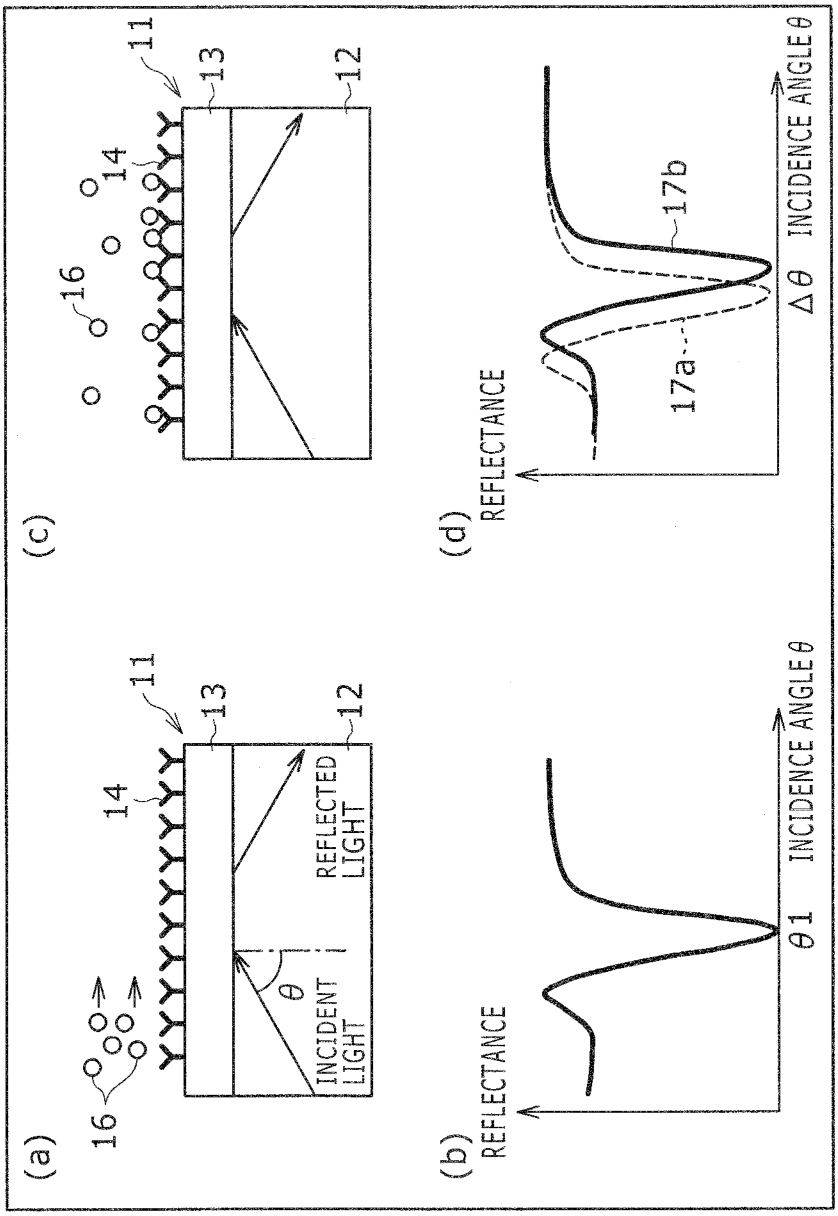
(a)
16
14
11
13
12
θ
INCIDENT LIGHT
REFLECTED LIGHT
(b)
REFLECTANCE
θ1
INCIDENCE ANGLE θ
(c)
16
14
11
13
12
(d)
REFLECTANCE
17a
17b
Δθ
INCIDENCE ANGLE θ

FIG. 11

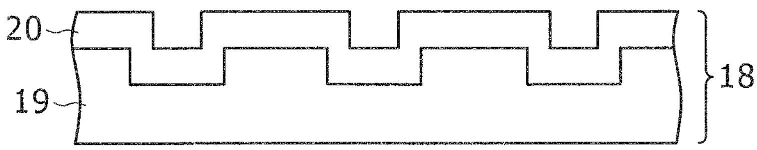
20
19
18

FIG.12

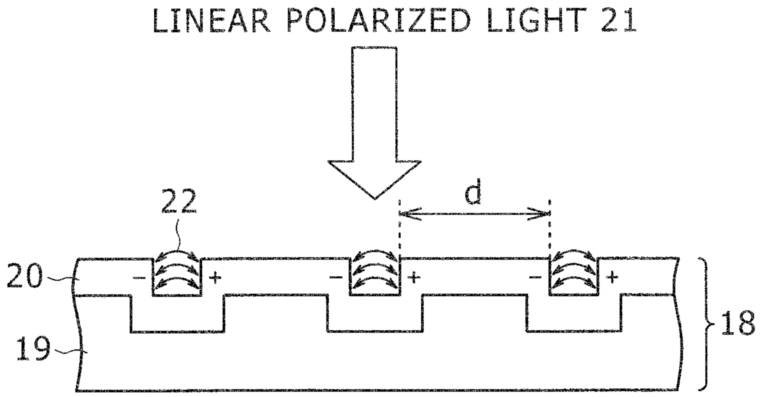


FIG.13

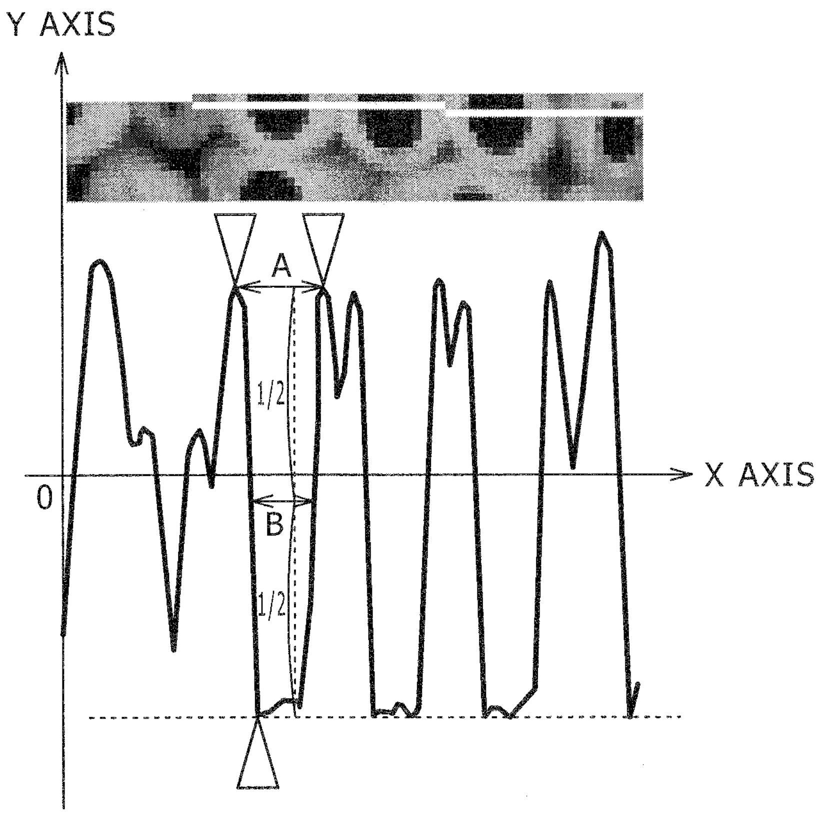

FIG. 14

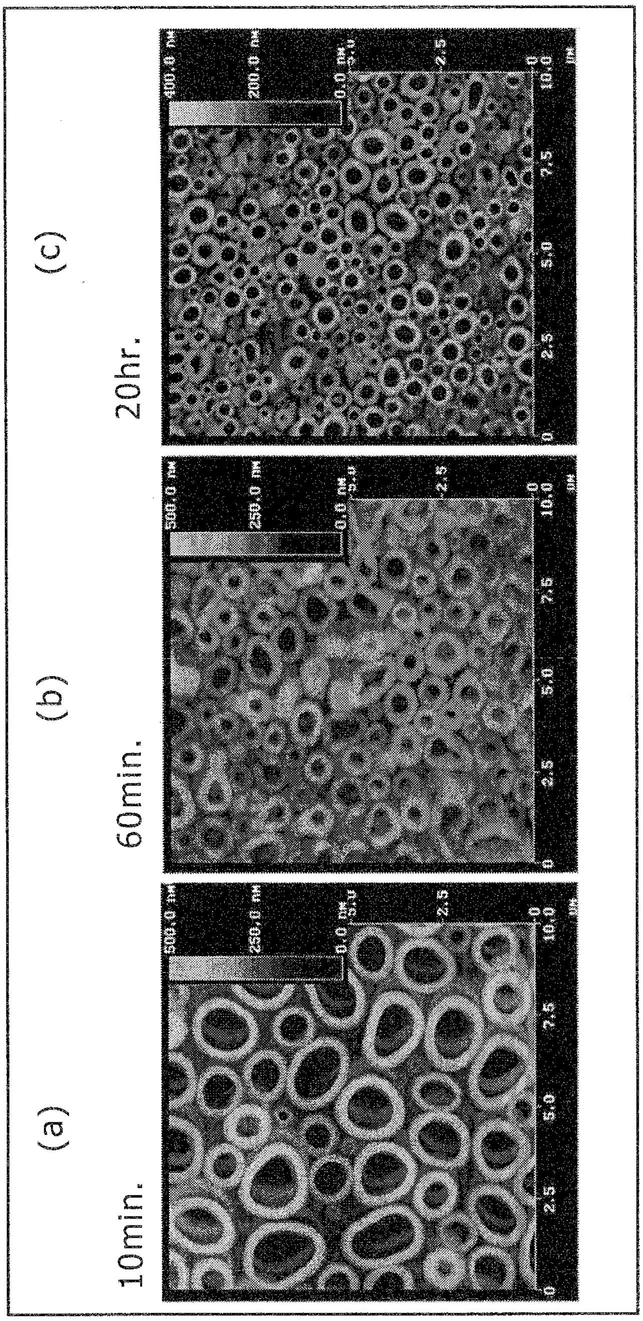

FIG.15

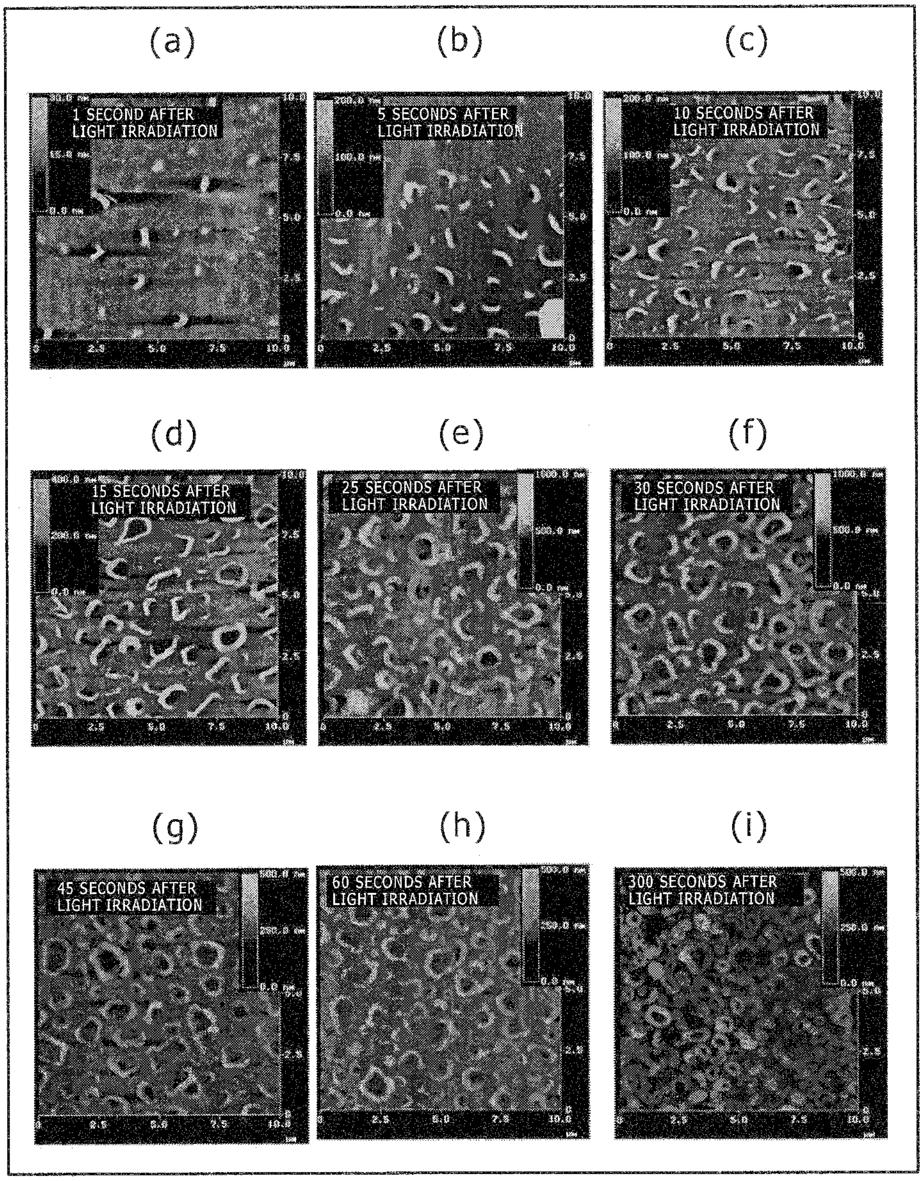
(a)
1 SECOND AFTER LIGHT IRRADIATION
(b)
5 SECONDS AFTER LIGHT IRRADIATION
(c)
10 SECONDS AFTER LIGHT IRRADIATION
(d)
15 SECONDS AFTER LIGHT IRRADIATION
(e)
25 SECONDS AFTER LIGHT IRRADIATION
(f)
30 SECONDS AFTER LIGHT IRRADIATION
(g)
45 SECONDS AFTER LIGHT IRRADIATION
(h)
60 SECONDS AFTER LIGHT IRRADIATION
(i)
300 SECONDS AFTER LIGHT IRRADIATION

FIG.16

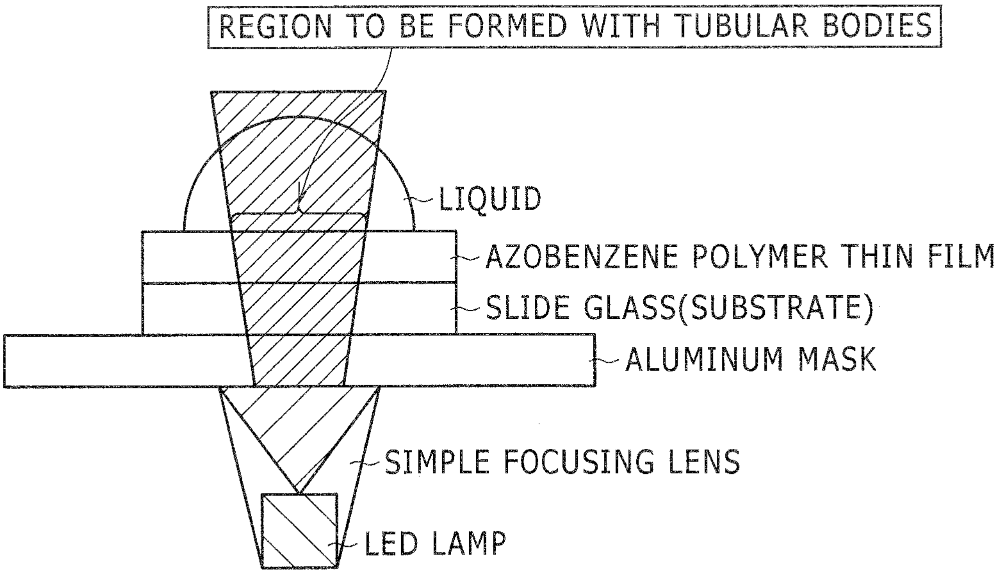
REGION TO BE FORMED WITH TUBULAR BODIES
LIQUID
AZOBENZENE POLYMER THIN FILM
SLIDE GLASS(SUBSTRATE)
ALUMINUM MASK
SIMPLE FOCUSING LENS
LED LAMP

FIG.17

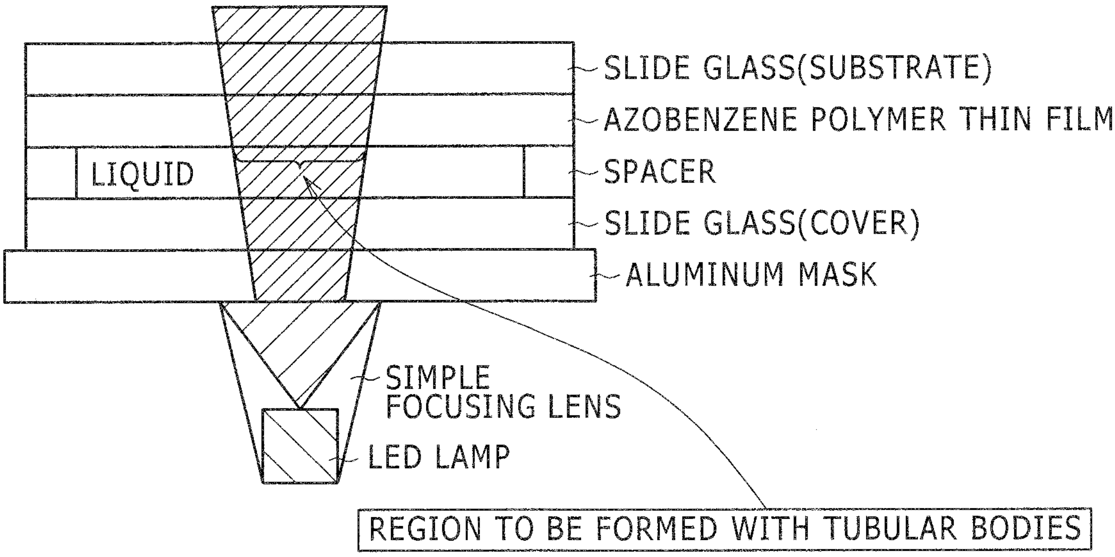
SLIDE GLASS(SUBSTRATE)
AZOBENZENE POLYMER THIN FILM
LIQUID
SPACER
SLIDE GLASS(COVER)
ALUMINUM MASK
SIMPLE FOCUSING LENS
LED LAMP
REGION TO BE FORMED WITH TUBULAR BODIES

FIG.18

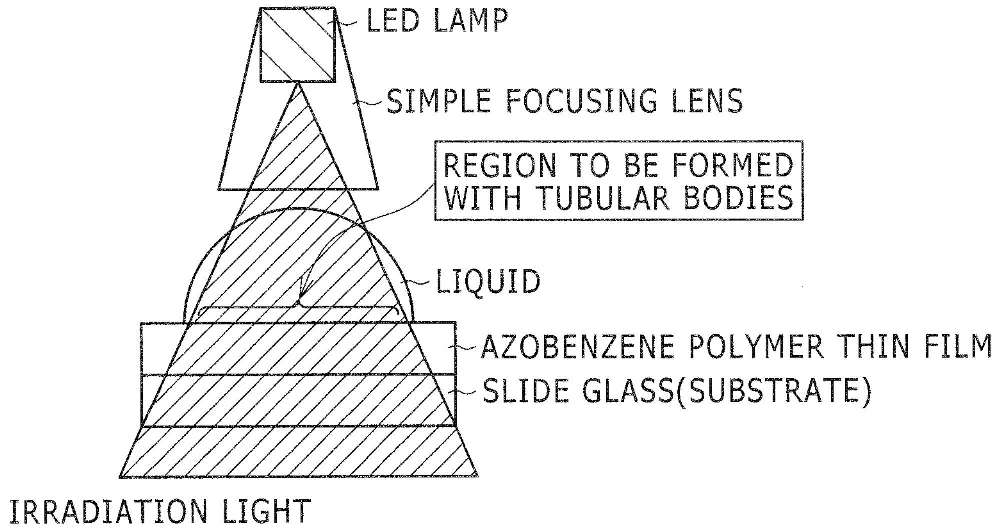
LED LAMP
SIMPLE FOCUSING LENS
REGION TO BE FORMED WITH TUBULAR BODIES
LIQUID
AZOBENZENE POLYMER THIN FILM
SLIDE GLASS(SUBSTRATE)
IRRADIATION LIGHT

FIG.19

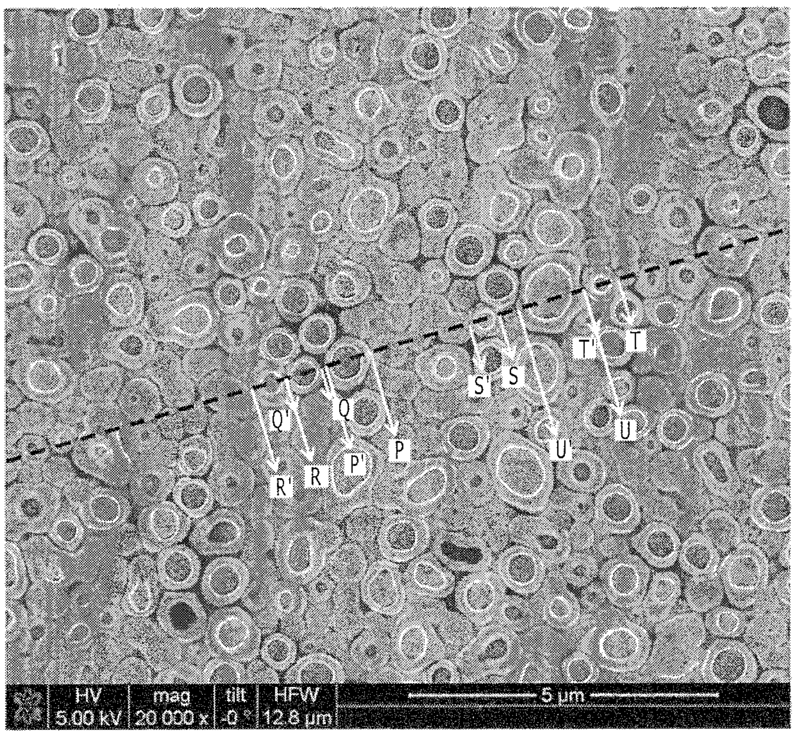
Q'
Q
R'
R
P'
P
S'
S
T'
T
U'
U
HV
5.00 kV
mag
20 000 x
tilt
-0 °
HFW
12.8 μm
5 μm

FIG.20

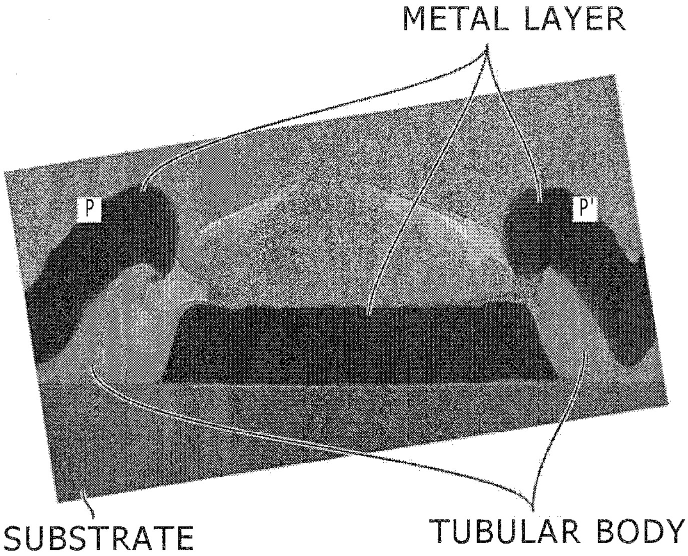
METAL LAYER
P
P'
SUBSTRATE
TUBULAR BODY

FIG.21

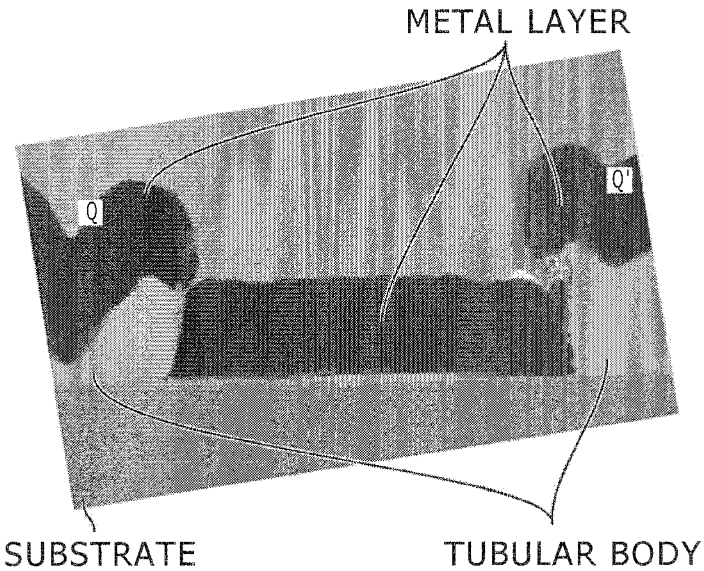
METAL LAYER
Q
Q'
SUBSTRATE
TUBULAR BODY

FIG.22

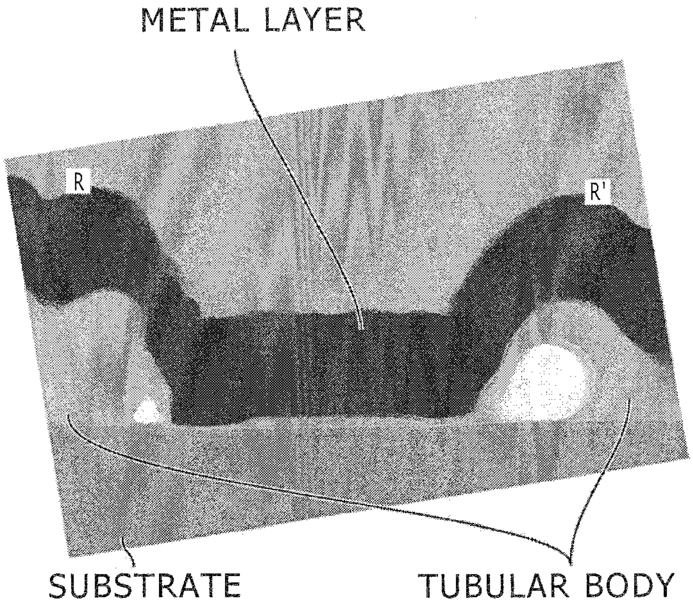
METAL LAYER
R
R'
SUBSTRATE
TUBULAR BODY

FIG.23

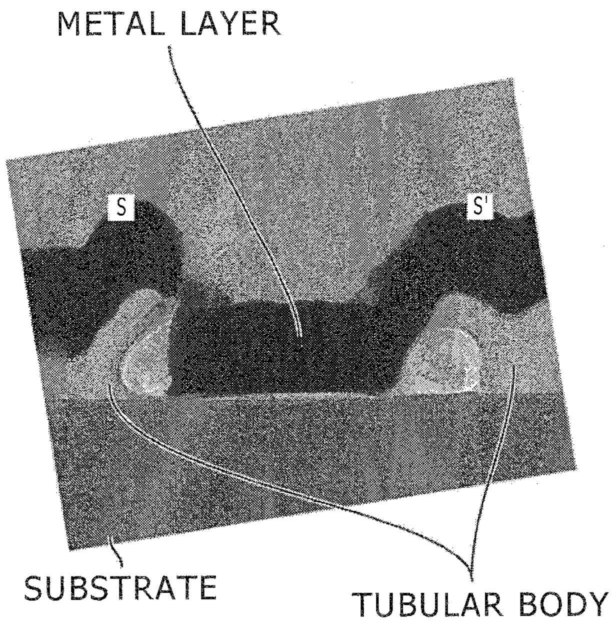
METAL LAYER
S
S'
SUBSTRATE
TUBULAR BODY

FIG.24

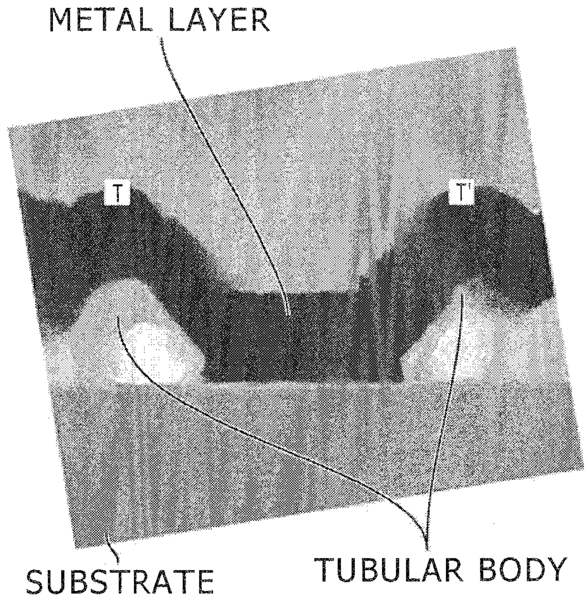


FIG.25

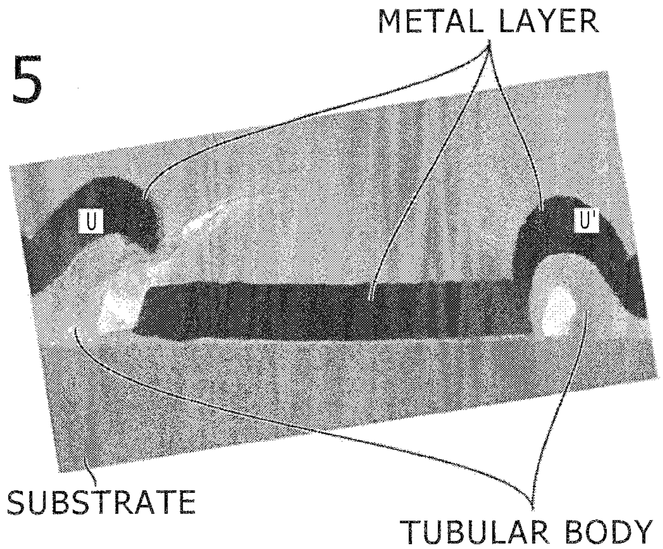


FIG.26

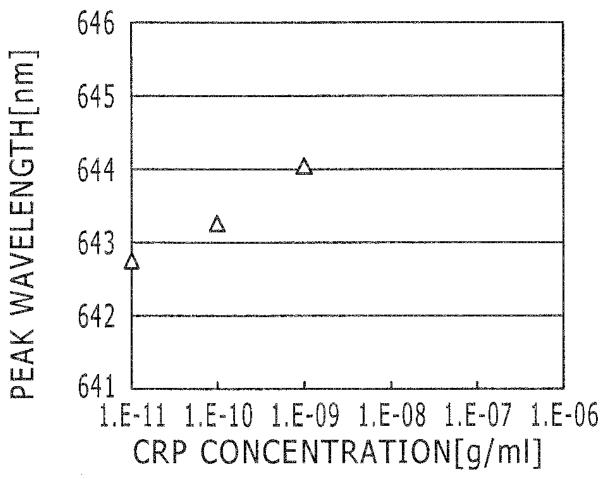

FIG.27

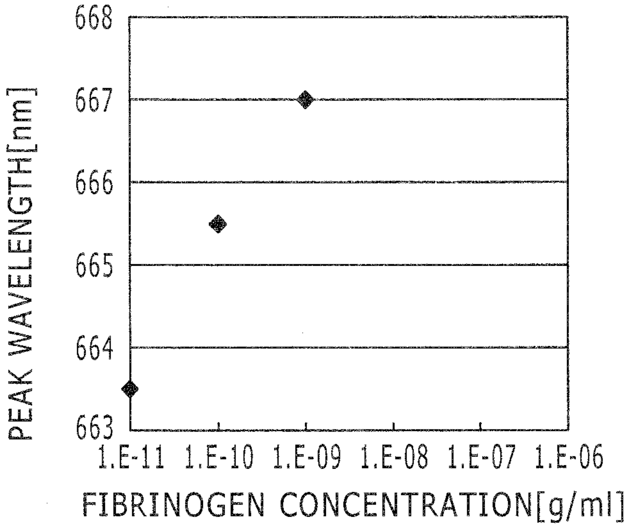


FIG.28

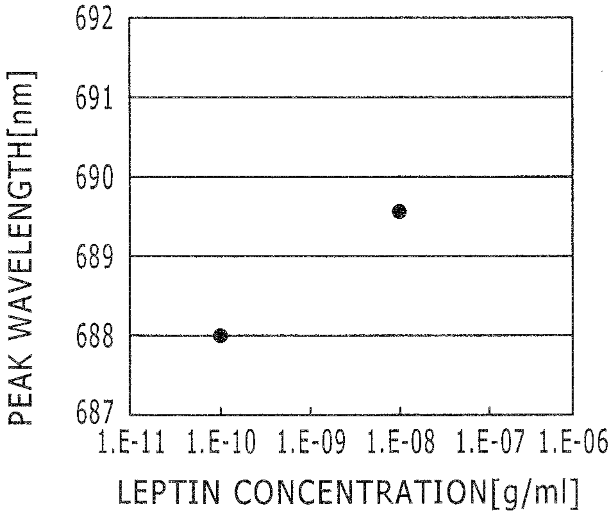


FIG.29

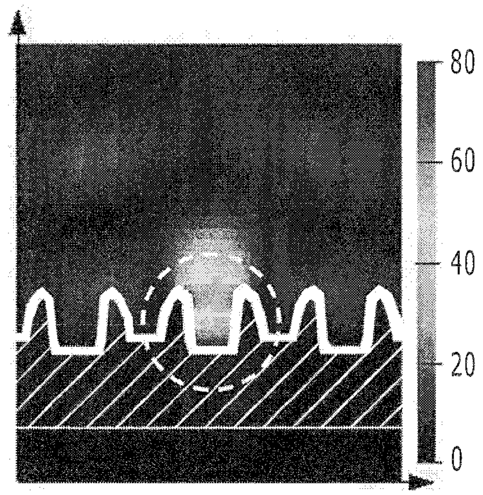

## INTERNATIONAL SEARCH REPORT

International application No.
PCT/JP2010/072055

A. CLASSIFICATION OF SUBJECT MATTER
*G01N21/27*(2006.01)i, *B82B1/00*(2006.01)i

According to International Patent Classification (IPC) or to both national classification and IPC

B. FIELDS SEARCHED

Minimum documentation searched (classification system followed by classification symbols)
G01N1/00-G01N37/00, B82B1/00-B82B3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus(JDreamII)

C. DOCUMENTS CONSIDERED TO BE RELEVANT

| Category* | Citation of document, with indication, where appropriate, of the relevant passages | Relevant to claim No. |
|---|---|---|
| X<br>Y | Kenji WADA et al., "Fabrication and characteristics of multi-functional nanostructures on glass by aluminum anodization, sol-gel process and electrodeposition", Journal of Japan Institute of Light Metals [ISSN:0451-5994], vol.54, no.11, 2004, pages 579 to 585 | 1-6<br>12-14 |
| X<br><br>Y | JP 2008-128893 A (Canon Inc.), 05 June 2008 (05.06.2008), paragraphs [0021] to [0022], [0033], [0050] to [0051], [0058] to [0060], [0071] to [0073], [0084], [0106] to [0109], [0116] to [0122]; fig. 1, 5 to 6, 8 to 9 | 1-2,9-11,<br>15-16,18-20<br>12-14,17 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 February, 2011 (16.02.11) | 01 March, 2011 (01.03.11) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2010/072055

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-216055 A (Omron Corp.), 18 September 2008 (18.09.2008), paragraphs [0126] to [0130], [0155]; fig. 31 to 32, 49 to 50 | 17 |
| X | JP 2005-081465 A (Sony Corp.), 31 March 2005 (31.03.2005), paragraphs [0036] to [0041]; fig. 4 | 1-3 |
| A | JP 2008-170241 A (Toyota Central Research and Development Laboratories, Inc.), 24 July 2008 (24.07.2008), fig. 8 | 7-8 |
| X<br>Y | JP 2004-235391 A (Semiconductor Leading Edge Technologies, Inc.), 19 August 2004 (19.08.2004), paragraphs [0018] to [0027] | 21,26<br>22-25 |
| Y | JP 2007-080966 A (Tosoh Corp.), 29 March 2007 (29.03.2007), paragraphs [0002] to [0005] | 22 |
| Y | JP 2005-305634 A (Fujitsu Ltd.), 04 November 2005 (04.11.2005), paragraphs [0156] to [0158]; fig. 27 | 23-25 |

Form PCT/ISA/210 (continuation of second sheet) (July 2009)

**INTERNATIONAL SEARCH REPORT**

International application No.
PCT/JP2010/072055

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

INTERNATIONAL SEARCH REPORT

International application No.
PCT/JP2010/072055

Continuation of Box No.III of continuation of first sheet(2)

The invention of claim 1 and the invention of claims 21-26 do not involve the same or corresponding special technical features.

Moreover, the invention of claims 1-6 is not admitted to involve any novelty to and any special technical feature over Light Metals, Vol. 54, No. 12, 2004, pp. 579-585.

Moreover, the inventions of claims 1-2, 9-11, 15-16 and 18-20 are not admitted to involve any novelty to and any special technical feature over the invention disclosed in JP 2008-128893 A.

In view of the disclosure of the aforementioned document 1-2, moreover, the searches have been substantially finished on claims 12-14.

Moreover, the searches on claim 17 have been ended, since the matter, which has been additionally mentioned in claim 17, is only a mere technique well-known to those skilled in the art, as exemplified in JP 2008-216055 A.

Thus, the claims contain the two invention groups having the following special technical features. Here, the invention of claims 1-6, 9-11, 15-16 and 18-20 having no special technical feature and the invention of claims 12-14 and 17, on which the search has been substantially ended, are grouped into invention 1.

(Invention 1) Invention of claims 1-20

A structure comprising a flat surface and a tubular body,

wherein the tubular body is so erected that an opening faces the face of said flat surface,

wherein the opening of said tubular body has an average internal diameter within a range of 5 nm to 2000 nm,

wherein the ratio (A/B) of the internal diameter A of the opening of said tubular body to the internal diameter B of said tubular body at an intermediate depth point from the opening is within a range of 1.00 to 1.80, and

wherein said tubular body has an aspheric bottom,

characterized in that said structure is made of a photoresponsive material containing an azo-polymer derivative.

(Invention 2) Invention of claims 21-26

A structure manufacturing method, comprising:

a liquid applying step of applying a liquid containing no particulate substance, to a photoresponsive material; and

a light emitting step of emitting a light to the photoresponsive material, to which the liquid has been applied at said liquid applying step.

Form PCT/ISA/210 (extra sheet) (July 2009)

**INTERNATIONAL SEARCH REPORT**
Information on patent family members

International application No.
PCT/JP2010/072055

| | | | |
|---|---|---|---|
| JP 2008-128893 A | 2008.06.05 | US 2008/117423 A1 | 2008.05.22 |
| JP 2008-216055 A | 2008.09.18 | CN 101261227 A | 2008.09.10 |
| | | EP 1967844 A1 | 2008.09.10 |
| | | US 2008/218761 A1 | 2008.09.11 |
| | | US 7839508 B2 | 2010.11.23 |
| JP 2005-081465 A | 2005.03.31 | CN 1845872 A | 2006.10.11 |
| | | EP 1661851 A1 | 2006.05.31 |
| | | JP 4329014 B2 | 2009.09.09 |
| | | KR 20060073611 A | 2006.06.28 |
| | | US 2008/315746 A1 | 2008.12.25 |
| | | WO 2005/023705 A1 | 2005.03.17 |
| JP 2008-170241 A | 2008.07.24 | (Family: none) | |
| JP 2004-235391 A | 2004.08.19 | JP 3795867 B2 | 2006.07.12 |
| | | US 2004/211756 A1 | 2004.10.28 |
| JP 2007-080966 A | 2007.03.29 | (Family: none) | |
| JP 2005-305634 A | 2005.11.04 | CN 1694163 A | 2005.11.09 |
| | | CN 100395821 C | 2008.06.18 |
| | | KR 20060044713 A | 2006.05.16 |
| | | KR 100647152 B1 | 2006.11.23 |
| | | US 2005/249980 A1 | 2005.11.10 |
| | | US 2008/145522 A1 | 2008.06.19 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2008216055 A
- JP 2008170241 A
- JP 2010059340 W
- JP 2006077239 A

### Non-patent literature cited in the description

- Synthesis of High-Tg Azo Polymer and the optimization of its poling condition for stable EO system. *Mat. Res. Soc. Symp. Proc.,* 1998, vol. 488, 813-818
- Direct Fabrication of Surface Relief Holographic Diffusers in Azobenzene Polymer Films. *OPTICAL REVIEW,* 2005, vol. 12 (5), 383-386
- *Macromolecule,* 1992, vol. 25, 2268-2273
- Diffraction efficiency increase by corona discharge in photoinduced surface relief gratings on an azo polymer film. *Optics Letters,* 01 January 2001, vol. 26 (1